# EUROPEAN PATENT APPLICATION

(11) **EP 4 575 936 A1**
(43) Date of publication of application: **25.06.2025**
(21) Application number: 23867539.1
(22) Date of filing: 20.09.2023
(51) Int. Cl.: G06N 20/00, G06N 5/04

(54) **INFORMATION ACQUISITION METHOD AND APPARATUS, NETWORK SIDE DEVICE AND STORAGE MEDIUM**

(30) Priority: 20.09.2022 CN 202211146190
(71) Applicant: Vivo Mobile Communication Co., Ltd., Dongguan, Guangdong 523863 (CN)
(72) Inventor: CHENG, Sihan, Dongguan, Guangdong 523863 (CN); WU, Xiaobo, Dongguan, Guangdong 523863 (CN)
(74) Representative: Shieldmark
(86) International application number: PCT/CN2023/119898
(87) International publication number: WO 2024/061252

(57) **Abstract**

The disclosure discloses a method and apparatus for fetching information, a network side device, and a storage medium, and belongs to the technical field of communication. The method for fetching information according to an embodiment of the disclosure includes: sending, by a first network side device, first request information to a second network side device, where the first request information is used for requesting the second network side device to determine model performance information of a target model; and receiving, by the first network side device, the model performance information of the target model sent by the second network side device, where the first request information includes target data and/or attribute information of the target data, the target data is used for determining the model performance information of the target model, and the attribute information of the target data is used for fetching the target data.

## Description

### CROSS-REFERENCE TO RELATED APPLICATIONS

The disclosure claims the priority to Chinese Patent Application No. 202211146190.9 filed with the Chinese Patent Office on September 20, 2022 and entitled "Method and Apparatus for Fetching Information, Network Side Device, and Storage Medium", which is incorporated herein in its entirety by reference.

### TECHNICAL FIELD

The disclosure belongs to the technical field of communication, and particularly relates to a method and apparatus for fetching information, a network side device, and a storage medium.

### BACKGROUND

With the rapid development of the computer technology and the communication technology, the application of the artificial intelligence (Artificial Intelligence, AI) technology to communication networks becomes increasingly wide. Some network side devices such as a network data analytics function (Network Data Analytics Function, NWDAF) can intelligently analyze data for specific tasks such as an AI inference task and generate data analytics results. Such data analytics results can assist internal and external devices of the communication networks in making policy decisions. That is, the artificial intelligence technology can improve the intelligence of the policy decisions. For example, the network data analytics function can train an artificial intelligence/machine learning (Machine Learning, ML) model based on training data and fetch a model suitable for a specific task. In an actual use stage, data analytics can be performed based on the model and corresponding input data, to fetch a data analytics result corresponding to the specific task.

An accurate data analytics result is a prerequisite for correct policy decisions made by the internal and external devices of the communication networks. If the data analytics results at a low accuracy rate are provided for the internal and external devices of the communication networks as reference of making policy decisions, the internal and external devices of the communication networks are probably caused to make wrong policy decisions or execute inappropriate operations.

The accuracy of the data analytics results can be determined based on the model performance of the artificial intelligence/machine learning model in an actual use stage. In view of that, how to fetch the model performance information in the actual use stage for determining the accuracy of the data analytics results and providing guarantee for making correct policy decisions by the internal and external devices of the communication networks is a pressing technical problem for those skilled in the art.

### SUMMARY

Embodiments of the disclosure provide a method and apparatus for fetching information, a network side device, and a storage medium, through which model performance information in an actual use stage is fetched, and guarantee is provided for making correct policy decisions by internal and external devices of a communication network.

In a first aspect, a method for fetching information is provided. The method includes:
sending, by a first network side device, first request information to a second network side device, where the first request information is used for requesting the second network side device to determine model performance information of a target model; and
receiving, by the first network side device, the model performance information of the target model sent by the second network side device, where
the first request information includes target data and/or attribute information of the target data, the target data is used for determining the model performance information of the target model, and the attribute information of the target data is used for fetching the target data.

In a second aspect, an apparatus for fetching information is provided. The apparatus includes:
a first sending module configured to send first request information to a second network side device, where the first request information is used for requesting the second network side device to determine model performance information of a target model; and
a first receiving module configured to receive the model performance information of the target model sent by the second network side device, where
the first request information includes target data and/or attribute information of the target data, the target data is used for determining the model performance information of the target model, and the attribute information of the target data is used for fetching the target data.

In a third aspect, a method for fetching information is provided. The method includes:
receiving, by a second network side device, first request information sent by a first network side device, where the first request information includes target data and/or attribute information of the target data, and the attribute information of the target data is used for fetching the target data;
determining, by the second network side device, model performance information of a target model based on the target data; and
sending, by the second network side device, the model performance information to the first network side device.

In a fourth aspect, an apparatus for fetching information is provided. The apparatus includes:
a second receiving module configured to receive first request information sent by a first network side device, where the first request information includes target data and/or attribute information of the target data;
a first determining module configured to determine model performance information of a target model based on the target data; and
a second sending module configured to send the model performance information to the first network side device.

In a fifth aspect, a method for fetching information is provided. The method includes:
receiving, by a third network side device, second indication information and third indication information that are sent by a first network side device;
storing, by the third network side device, first data and/or relevant information of the first data according to the second indication information; and
collecting and storing, by the third network side device, second data and/or relevant information of the second data according to the third indication information, where
the first data and the second data are partial data of target data, the target data is used for determining model performance information of a target model, and the relevant information of the first data and the relevant information of the second data are used for fetching the target data.

In a sixth aspect, an apparatus for fetching information is provided. The apparatus includes:
a third receiving module configured to receive second indication information and third indication information that are sent by a first network side device; and
a storing module configured to store first data and/or relevant information of the first data according to the second indication information; and collect and store second data and/or relevant information of the second data according to the third indication information, where
the first data and the second data are partial data of target data, the target data is used for determining model performance information of a target model, and the relevant information of the first data and the relevant information of the second data are used for fetching the target data.

In a seventh aspect, a network side device is provided. The network side device includes: a processor and a memory, where the memory stores a program or instructions that are runnable on the processor, and the program or the instructions implement steps of the method for fetching information according to the first aspect, steps of the method for fetching information according to the third aspect, or steps of the method for fetching information according to the fifth aspect when executed by the processor.

In an eighth aspect, a readable storage medium is provided. The readable storage medium stores a program or instructions, where the program or the instructions implement steps of the method for fetching information according to the first aspect, steps of the method for fetching information according to the third aspect, or steps of the method for fetching information according to the fifth aspect when executed by a processor.

In a ninth aspect, a computer program/program product is provided. The computer program/program product is stored in a storage medium, and the computer program/program product is executed by at least one processor to implement steps of the method for fetching information according to the first aspect, steps of the method for fetching information according to the third aspect, or steps of the method for fetching information according to the fifth aspect.

In the embodiment of the disclosure, the first network side device sends the first request information to the second network side device, and the first request information is used for requesting the second network side device to determine the model performance information of the target model. After determining the model performance information of the target model based on the target data, the second network side device sends the model performance information of the target model to the first network side device. The first network side device fetches the model performance information of the target model accordingly. Then, accuracy of a data analytics result of the target model in an actual use stage can be determined according to the model performance information. Thus, a data analytics result with high accuracy is provided for and assists the internal and external devices of the communication network in making policy decisions, and guarantee is provided for making correct policy decisions by the internal and external devices of the communication network.

### BRIEF DESCRIPTION OF THE DRAWINGS

FIG. 1 is a block diagram of an applicable radio communication system according to an embodiment of the disclosure;
FIG. 2 is an implementation flowchart of a method for fetching information according to an embodiment of the disclosure;
FIG. 3 is a flowchart of a specific example of information acquisition according to embodiment of the disclosure;
FIG. 4 is a flowchart of another specific example of information acquisition according to an embodiment of the disclosure;
FIG. 5 is a schematic structural diagram of an apparatus for fetching information corresponding to FIG. 2 according to an embodiment of the disclosure;
FIG. 6 is an implementation flowchart of another method for fetching information according to an embodiment of the disclosure;
FIG. 7 is a schematic structural diagram of an apparatus for fetching information corresponding to FIG. 6 according to an embodiment of the disclosure;
FIG. 8 is an implementation flowchart of yet another method for fetching information according to an embodiment of the disclosure;
FIG. 9 is a schematic structural diagram of an apparatus for fetching information corresponding to FIG. 8 according to an embodiment of the disclosure;
FIG. 10 is a schematic structural diagram of a network side device according to an embodiment of the disclosure; and
FIG. 11 is another schematic structural diagram of a network side device according to an embodiment of the disclosure.

### DETAILED DESCRIPTION

Technical solutions in embodiments of the disclosure will be clearly described below in conjunction with accompanying drawings in the embodiments of the disclosure. Apparently, the embodiments described are some embodiments rather than all embodiments of the disclosure. Based on the embodiments in the disclosure, all other embodiments derived by those of ordinary skill in the art should fall within the protection scope of the disclosure.

Terms such as "first" and "second" in the description and the claims of the disclosure are used for distinguishing similar objects rather than describing a specific sequence or a sequential order. It should be understood that terms used in this way can be interchanged under appropriate circumstances, such that the embodiment of the disclosure can be implemented in a sequence other than those illustrated or described herein. In addition, the objects distinguished with "first" or "second" are usually objects of one class with the number of objects unlimited. For example, a first object can indicate one or more first objects. In addition, "and/or" in the description and the claims indicates at least one of connected objects, and the character "/" generally indicates that associated objects in the context are in an "or" relationship.

It is worth pointing out that the technology described in the embodiment of the disclosure is not limited to a long term evolution (Long Term Evolution, LTE)/LTE-advanced (LTE-Advanced, LTE-A) system, and can also be used in other radio communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of the disclosure are often used interchangeably, and the technology described may be used for the systems and radio technologies mentioned above, and may alternatively be used for other systems and radio technologies. A new radio (New Radio, NR) system is illustratively described in the following description, and the term NR is used in most of the following description. But these technologies may alternatively be applied to application other than the NR system application, such as a 6^{th} Generation (6^{th} Generation, 6G) communication system.

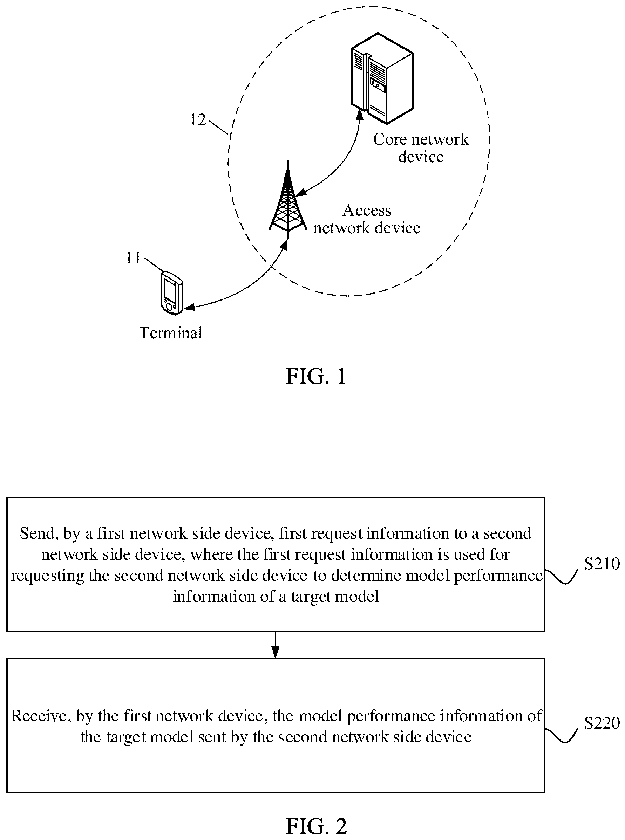

FIG. 1 shows a block diagram of an applicable radio communication system according to an embodiment of the disclosure. The radio communication system includes a terminal 11 and a network side device 12.

The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicular user equipment (VUE), pedestrian user equipment (PUE), a smart home (a house device with a radio communication function, such as a refrigerator, a television, a washer or a furniture), a game machine, a personal computer (personal computer, PC), an automated teller machine or a self-service machine, and other terminal side devices. The wearable device includes: a smart watch, a smart wristband, smart headphones, smart glasses, a smart jewelry (a smart bracelet, a smart hand chain, a smart ring, a smart necklace, a smart anklet, a smart ankle chain, etc.), a smart wristband, smart clothing, etc. It should be noted that a specific type of the terminal 11 is not limited in the embodiment of the disclosure.

The network side device 12 may include an access network device or a core network device.

The access network device may alternatively be referred to as a radio access network device, a radio access network (Radio Access Network, RAN), a radio access network function or a radio access network unit. The access network device may include a base station, a WLAN access point, a WiFi node, etc. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP) or other appropriate terms in the field. As long as the same technical effect is achieved, the base station is not limited to a specific technical term. It should be noted that in the embodiment of the disclosure, an introduction will be provided merely with the base station in the NR system as an example, and a specific type of the base station is not limited.

The core network device may include, but is not limited to, at least one of the following: a core network node, a core network function, a mobility management entity (Mobility Management Entity, MME), an access and mobility management function, (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), etc. It should be noted that in the embodiment of the disclosure, an introduction will be provided merely with the core network equipment in the NR system as an example, and a specific type of the core network device is not limited.

For the convenience of understanding, at first, application scenarios, and related arts, and concepts of the embodiment of the disclosure will be described at first.

The embodiment of the disclosure may be applied to a scenario where an artificial intelligence/machine learning model, such as a target model is used to execute a target task. The target model is a selected or trained model that can satisfy demand for the target task. In an actual use stage, corresponding input data is input into the target model, and corresponding output data may be fetched, that is, a data analytics result corresponding to the target task may be fetched. The data analytics result may include prediction information of a future time period or time node, or summary information of historical data of a previous time period or time node. Accuracy of the data analytics result may be determined through model performance information of the target model in the actual use stage.

As described in the background, a network data analytics function can intelligently analyze data for specific tasks and generate data analytics results. Such data analytics results can assist internal and external devices of communication networks in making policy decisions. The network data analytics function may be divided into two network elements, that is, an analytics logical function (Analytics Logical Function, AnLF) and a model training logical function (Model Training Logical Function, MTLF).

The analytics logical function may infer and generate the prediction information or generate the summary information of the historical data. For example, an inference analytics service may be provided according to a request from a consumer.

The model training logical function may generate a model and train the model. For example, a training service of the artificial intelligence/machine learning model may be provided according to the request from the consumer.

In a specific example, an interaction process between the analytics logical function (AnLF) and the model training logical function (MTLF) is as follows:
the AnLF may request information of one or a group of machine learning (ML) models associated with one or a group of task identifiers from the MTLF by invoking an ML model information request, such as Nnwdaf_MLModelInfo_Request, and the AnLF uses the ML model for data analytics.

When the MTLF receives the ML model information request sent by the AnLF, the MTLF may determine whether an existing ML model may be used for the request or whether an existing ML model needs to be further trained. In a case that further training is needed, the MTLF starts a data collection operation, and collects data from the network side device such as a network function (Network Function, NF), an application function (Application Function, AF) or operation administration and maintenance (Operation Administration and Maintenance, OAM), and uses the data for training the ML model. The network function may be an access and mobility management function (AMF), a data collection coordination function (Data Collection Coordination Function, DCCF), an analytics data repository function (Analytics Data Repository Function, ADRF), etc.

The MTLF may provide the AnLF with ML model information by invoking an ML model information request response, such as Nnwdaf_MLModelInfo_Request response, and the ML model information includes information such as a file address of the one or group of ML models.

In another specific example, an interaction process between the network data analytics function (NWDAF) and the analytics data repository function (ADRF) is as follows:
The NWDAF may send data and/or analytics results to the ADRF by invoking a data management storage request, such as Nadrf_DataManagement_StorageRequest.

The ADRF stores the data and/or analytics results sent by the NWDAF. The ADRF may determine whether identical data and/or analytics results are stored or are being stored based on the data and/or analytics results sent by the NWDAF. In a case that the identical data and/or analytics results are stored or are being stored by the ADRF, the ADRF may determine not to store the data and/or analytics results sent by the NWDAF.

The ADRF may send storage information of the data and/or analytics results to the NWDAF by invoking a data management storage request response, such as Nadrf_DataManagement_StorageRequest response.

The interaction process between the NWDAF and the ADRF is also applicable to interaction processes between a data collection coordination function (DCCF) and the ADRF and between a messaging framework adapter function (Messaging Framework Adaptor Function, MFAF) and the ADRF.

It can be seen from the description described above that the MTLF is mainly used for generating the AI/ML model and training the model, and providing a trained model for the AnLF. The AnLF puts the model into actual use for inferring and fetching the prediction information or generating the summary information of the historical data, and the ADRF is mainly used for storing data. For any AI/ML model, accuracy that the model may achieve in different stages may be different, that is, accuracy that the model may achieve in a training stage may be different from accuracy that the model may achieve in the actual use stage. Factors such as different data distributions in different stages and an insufficient generalization capacity of the model may lead to a difference in accuracy that the model may achieve in different stages. In general, the accuracy that the model may achieve in the actual use stage may be lower than the accuracy that the model may achieve in the training stage.

Thus, the AnLF needs to know model performance information of the model in the actual use stage, and determine accuracy of a data analytics result of the model in the actual use stage according to the model performance information. Thus, a data analytics result with high accuracy is provided for and assists the internal and external devices of the communication network in making policy decisions, and guarantee is provided for making correct policy decisions by the internal and external devices of the communication network.

The application scenarios, the related arts, and the concepts of the embodiments of the disclosure are described above, and a method for fetching information according to the embodiment of the disclosure will be described in detail in conjunction with accompany drawings and through some embodiments and their application scenarios.

As shown in FIG 2, an implementation flowchart of a method for fetching information is shown according to an embodiment of the disclosure. The method may include a step as follows:
S210: A first network side device sends first request information to a second network side device. The first request information is used for requesting the second network side device to determine model performance information of a target model. The first request information includes target data and/or attribute information of the target data, the target data is used for determining the model performance information of the target model, and the attribute information of the target data is used for fetching the target data.

In the embodiment of the disclosure, the first network side device may be any network side device that fetches the target model and needs to analyze actual data by using the target model, such as the AnLF and the NWDAF. The second network side device may be any network device that may determine the model performance information of the target model, such as the MTLF and the NWDAF.

A consumer network element such as the SMF, the AMF, the UPF, and the PCF may send a task request to the first network side device according to actual demand, and the task request is used for requesting a target task to be executed, to fetch a data analytics result of the target task. After receiving the task request, the first network side device may fetch the target model. For example, the first network side device may send a model request to the second network side device, and the model request is used for requesting acquisition of the target model that is used for executing the target task. The second network side device selects or trains a target model that satisfies an execution demand for the target task, and then sends the target model to the first network side device. After fetching the target model, the first network side device may put the target model into actual use, and in the actual use stage, the data analytics result corresponding to the target task may be fetched based on the target model and corresponding input data.

In the actual use stage of the target model, the first network side device may send the first request information to the second network side device in a case that a set model performance information determination triggering condition is reached. The first request information is used for requesting the second network side device to test a model performance condition of the target model and determine the model performance information of the target model.

The model performance information determination triggering condition may be set according to an actual condition. For example, in a case that the model performance information determination triggering condition may be considered to be reached within a set time interval, the model performance condition is periodically tested, or in a case that a test indication from the consumer network element is received, it is considered that the model performance information determination triggering condition is reached. As long as the model performance information determination triggering condition is satisfied, the first network side device may be triggered to send the first request information to the second network side device, and the second network side device is caused to test the model performance condition of the target model and determine the model performance information of the target model.

The first request information may include the target data, the attribute information of the target data, or the target data and the attribute information of the target data. The target data is used for determining the model performance information of the target model, and the attribute information of the target data is used for fetching the target data. In a case that the first request information includes the target data and the attribute information of the target data, the attribute information of the target data serves as a supplement and description to the target data.

After receiving the first request information sent by the first network side device, the second network side device may determine the model performance information of the target model based on the target data, and then send the model performance information to the first network side device. In a case that the first request information includes target data, the second network side device may directly determine the model performance information of the target model based on the target data. In a case that the first request information includes the attribute information of the target data, the second network side device may fetch the target data according to the attribute information of the target data before the second network side device determines the model performance information of the target model based on the target data.

The target data and/or the attribute information of the target data that are/is included in the first request information may be specifically relevant information of first partial data of the target data and second partial data of the target data. The first partial data and the second partial data are partial data of the target data respectively, and the relevant information of the first partial data is used for fetching the first partial data. A combination of the first partial data and the second partial data may constitute the target data. That is, the first network side device sends the relevant information of the first partial data and the second partial data to the second network side device. The second network side device may fetch the first partial data according to the relevant information of the first partial data. For example, a third network side device that stores the first partial data may be determined according to the relevant information of the first partial data, the first partial data may be fetched from the third network side device, and fetched first partial data may be combined with received second partial data sent by the first network side device, to fetch the target data.

The target data in the embodiment of the disclosure are relevant data corresponding to the target model in the actual use stage, and may include input data corresponding to the target model, output data corresponding to the target model, label data corresponding to the target model, etc. Relevant data corresponding to the target model during model training before the target model is put into actual use are training data. It is clear that in a case that the target model needs to be retrained after the target model is put into actual use, training data corresponding to a retraining stage may include target data corresponding to a previous actual use stage.

S220: The first network side device receives the model performance information of the target model sent by the second network side device.

The first network side device sends the first request information to the second network side device, to request the second network side device to test the model performance condition of the target model. After determining the model performance information, the second network side device may send the model performance information of the target model to the first network side device. After receiving the model performance information of the target model sent by the second network side device, the first network side device may learn the model performance condition of the target model in the actual use stage.

After learning the model performance information of the target model, the first network side device may determine accuracy of the target model in the actual use stage according to the model performance information of the target model. In a case that the accuracy of the target model in the actual use stage is low, it can be considered that an accuracy rate of a data analytics result fetched by using the target model is low, and the first network side device may stop feeding back the data analytics result to the consumer network element, to prevent the consumer network element from making a wrong policy decision or executing an inappropriate operation based on the data analytics result that has the low accuracy rate. In a case that the accuracy of the target model in the actual use stage is high, it can be considered that an accuracy rate of a data analytics result fetched by using the target model is high, and the first network side device may continue to feed back the data analytics result to the consumer network element, to guarantee the consumer network element to make a correct policy decision or execute an appropriate operation based on the data analytics result that has the high accuracy rate.

Or in a case that the accuracy of the target model in the actual use stage is low, the first network side device may send a model retraining request or a model reselection request to the second network side device, to request the second network side device to retrain or reselect the target model, and improve the accuracy of the model.

By using the method according to the embodiment of the disclosure, the first network side device sends the first request information to the second network side device, and the first request information is used for requesting the second network side device to test the model performance condition of the target model. After testing the model performance condition of the target model based on the target based on the target data and determining the model performance information, the second network side device sends the model performance information of the target model to the first network side device. The first network side device fetches the model performance information of the target model accordingly. Then, the accuracy of the data analytics result of the target model in the actual use stage can be determined according to the model performance information. Thus, the data analytics result with the high accuracy is provided for and assists the internal and external devices of the communication network in making the policy decisions, and the guarantee is provided for making correct policy decisions by the internal and external devices of the communication network.

In an embodiment of the disclosure, the first request information may further include at least one of the following:
first indication information;
model performance expectation information;
model monitoring time requirement information; and
model monitoring area requirement information.

The first indication information is used for indicating the second network side device to determine the model performance information of the target model.

The model performance expectation information is used for indicating the model performance information of the target model expected by the first network side device.

The model monitoring time requirement information is used for indicating a time range within which the second network side device determines the model performance information of the target model.

In the embodiment of the disclosure, the first request information may further include at least one of the following:
(1) The first indication information. The first indication information is used for indicating the second network side device to determine the model performance information of the target model. After receiving the first request information sent by the first network side device, the second network side device may learn that the first network side device has a request for determination of the model performance information of the target model according to the first indication information included in the first request information, and then may perform a corresponding operation.
   The first indication information may be explicit, such as being carried by a specific cell. The first indication information may alternatively be implicit, such as expressed by a name of a message carrying the first request information.
(2) The model performance expectation information. The model performance expectation information is used for indicating the model performance information of the target model expected by the first network side device. The model performance expectation may be a threshold, a preset condition, etc. The first network side device may inform the second network side device of expected and acceptable model performance information of the target model through the model performance expectation information. In a case that after the second network side device determines the model performance information of the target model, the model performance information does not satisfy the model performance expectation corresponding to the model performance expectation information, some subsequent operations may be triggered, such as retraining the model, reselecting the model, informing the first network side device that the model performance declines and does not satisfy the expectation.
   It is clear that the model performance expectation information may alternatively be carried in a model acquisition request sent by the first network side device to the second network side device.
(3) The model monitoring time requirement information. The model monitoring time requirement information is used for indicating the time range within which the second network side device determines the model performance information of the target model. The first network side device may inform, through the model monitoring time requirement information, the second network side device of the time range within which the model performance condition of the target model is to be monitored. For example, in a case that the model monitoring time requirement information indicates 1 month, the second network side device needs to fetch relevant data regularly in a next month, to determine the model performance information. For example, in a case that the first request information does not include the model monitoring time requirement information or the model monitoring time requirement information indicates immediate, the second network side device may fetch the target data immediately after receiving the first request information, and determine the model performance information based on the target data. Such determination is performed once, and the second network side device does not need to collect data for model monitoring for a long time.
(4) The model monitoring area requirement information. The model monitoring area requirement information is used for indicating the area range within which the second network side device determines the model performance information of the target model. The first network side device may inform, through the model monitoring area requirement information, the second network side device of the area range within which the model performance condition of the target model is to be monitored. For example, in a case that the model monitoring area requirement information indicates a particular cell, the second network side device may fetch relevant data within the cell range, to determine the model performance information.

The first request information includes at least one of the information described above. The determination of the model performance information of the target model by the second network side device may be constrained through the information described above, so as to better satisfy demand from the first network side device.

In an embodiment of the disclosure, the attribute information of the target data may include at least one of the following:
task information corresponding to the target data;
information of the model targeted by the target data;
data description information corresponding to the target data; and
storage information corresponding to the target data.

That is, the attribute information of the target data may include one or more of the task information corresponding to the target data, the information of the model targeted by the target data, the data description information corresponding to the target data, and the storage information corresponding to the target data. The target data may be fetched according to the attribute information of the target data.

The task information corresponding to the target data may include at least one of the following:
(1) Identifier information of a target task corresponding to the target data, for example, an analytics ID. The identifier information of the target task corresponding to the target data may indicate a specific task targeted by the target data;
(2) Conditional qualification information of the target task, for example, analytic filter information. The conditional qualification information of the target task is used for indicating a filter condition of a data analytics result corresponding to the target task, for example, filtering of the data analytics result based on an area of interest (Area Of Interest, AOI), a single network slice selection assistance information (Single Network Slice Selection Assistance information, S-NSSAI), a data network name (data network name, DNN), etc.; and
(3) Target information targeted by the target task, for example, target of analytic reporting. The target information targeted by the target task may indicate that the object executing the target task for data analytics is a particular terminal, a plurality of terminals or all terminals.

The information of the model targeted by the target data may include at least one of the following:
(1) Identifier information of the model targeted by the target data, for example, a model ID. The identifier information of the model targeted by the target data may indicate that the target data is targeted at a particular model. In the embodiment of the disclosure, the model targeted by the target data is the target model; and
(2) Filter information of the model targeted by the target data. The filter information of the model targeted by the target data may indicate a filter condition that the model targeted by the target data needs to satisfy, such as the AOI, the S-NSSAI, and the DNN.

The data description information corresponding to the target data may include at least one of the following:
(1) Data type information of the target data. The data type information of the target data may indicate that target data of a data type are to be fetched, for example, acquisition of target data of a terminal location information type;
(2) Time range information corresponding to the target data. The time range information corresponding to the target data is used for indicating a time range within which time information corresponding to the target data is. The time range information corresponding to the target data may indicate that data within a time range are to be fetched. The time range information may include a start time node and an end time node. For example, the time information corresponding to the data is generation time. The time range information may indicate that data generated between the start time node and the end time node are fetched; and
(3) Location range information corresponding to the target data. The location range information corresponding to the target data is used for indicating a location range within which location information corresponding to the target data is. The location range information corresponding to the target data may indicate that data within a location range are to be fetched. For example, the location information corresponding to the data is a location of data generation. The location range information may indicate that data located within the location range when generated are fetched, for example, data located within a tracking area (Tracking Area, TA) or a cell when generated.

The storage information corresponding to the target data may include at least one of the following:
(1) Identifier information of a third network side device storing the target data, for example, an ID of the third network side device. The identifier information storing the target data of the third network side device may indicate that the target data is stored in a device;
(2) Address information of the third network side device, for example, an Internet protocol (IP) address, and a fully qualified domain name (Fully Qualified Domain Name, FQDN) of the third network side device. The address information of the third network side device may indicate a way to establish a connection to the third network side device;
(3) Storage tag information of the target data, for example, a storage transaction tag. The storage tag information of the target data may indicate a way to search for the target data. The storage tag information may be information such as an index specifically. Different pieces of storage tag information may correspond to different storage methods; and
(4) Identifier information of the first network side device, for example, an ID of the first network side device.

The identifier information of the first network side device and the storage tag information of the target data may be used in combination to fetch the target data more accurately.

The first request information sent by the first network side device to the second network side device includes the attribute information of the target data, and the attribute information of the target data includes one or more of the information described above. Thus, the second network side device can accurately fetch the target data according to the attribute information of the target data, determine the model performance information of the target model based on the target data, and properly satisfy test demand for the model performance condition from the first network side device.

It should be noted that the model performance information of the target model may be used for indicating accuracy and/or an error degree of the inference result in actual inference. An expression form of the model performance information may be varied, for example, a specific percentage value such as 90%, a classification expression form such as high, medium and low, or normalized data such as 0.9. The embodiment of the disclosure does not specifically limit the expression form of the model performance information. The model performance information of the target model may indicate the accuracy or the error degree of the inference result of the target task by the target model from the obverse and reverse. For example, inference accuracy of the target model may be indicated from the reverse by computing an inference error or an inference error rate of the target model. The inference error or the inference error rate may be computed by various methods, such as mean absolute error (Mean Absolute Error, MAE) and a mean square error (Mean Square Error, MSE).

In addition, it should be noted that in a case that the first request information includes the relevant information of the first partial data and the second partial data, reference may be made to the attribute information of the target data for the relevant information of the first partial data. For example, the relevant information of the first partial data may include at least one of task information corresponding to the first partial data, information of the model targeted by the first partial data, data description information corresponding to the first partial data, and storage information corresponding to the first partial data, such that the second network side device may fetch the first partial data accurately through the relevant information of the first partial data.

In an embodiment of the disclosure, in a case that the first request information includes the attribute information of the target data, before the step that a first network side device sends first request information to a second network side device, the method may further include steps as follows:
Step 1: The first network side device fetches first data, where the first data is partial data or all data of the target data.
Step 2: The first network side device sends second indication information to the third network side device, where the second indication information includes the first data and/or relevant information of the first data, and the second indication information is used for indicating the third network side device to store the first data and/or relevant information of the first data.

For the convenience of description, the two steps are combined and described.

In the embodiment of the disclosure, the first request information may include the attribute information of the target data. Before the first network side device sends the first request information to the second network side device, the first network side device may fetch the first data at first. For example, the first network side device may determine a data source network element through the task information, and fetch the first data through the data source network element. The first data is partial data or all data of the target data. After fetching the first data, the first network side device may send the second indication information to the third network side device, and the second indication information includes the first data and/or the relevant information of the first data.

The second indication information may be explicit, such as being carried by a specific cell. The second indication information may alternatively be implicit, such as expressed by a name of a message carrying the information.

The third network side device may be any network device that may store data, such as the ADRF. The second indication information sent by the first network side device to the third network side device is used for indicating the third network side device to store the first data and/or the relevant information of the first data. The third network side device may store the first data and/or the relevant information of the first data according to the second indication information.

In a case that the first data is all data of the target data, it indicates that the target data is fetched by the first network side device, and then stored in the third network side device. In a case that the second network side device needs to fetch the target data, the second network side device may fetch same through interaction with the third network side device.

In a case that the first data is partial data of the target data, it indicates that some of the target data is fetched by the first network side device, and it indicates that the partial data is stored in the third network side device. The other partial data of the target data may be fetched by other forms, for example, collected by the third network side device, and the third network side device collects and stores the other partial data of the target data. Thus, the target data is stored in the third network side device. In a case that the second network side device needs to fetch the target data, the second network side device may fetch same through interaction with the third network side device. For example, the second network side device may collect the target data.

In an embodiment of the disclosure, the method may further include a step as follows:
the first network side device receives first storage feedback information sent by the third network side device.

The first storage feedback information includes storage tag information corresponding to the first data.

In the embodiment of the disclosure, the first network side device fetches the first data and sends the second indication information to the third network side device. The third network side device stores the first data and/or the relevant information of the first data, and may return first storage feedback information to the first network side device after completing storage. The first storage feedback information may include the storage tag information corresponding to the first data. It is clear that in a case that the third network side device determines that the third network side device stores the first data and/or the relevant information of the first data after receiving the second indication information, the third network side device may directly return the first storage feedback information to the first network side device.

After receiving the first storage feedback information sent by the third network side device, the first network side device learns that the third network side device completes storing of the first data and/or the relevant information of the first data, and can fetch corresponding storage tag information, and include the storage tag information in the attribute information of the target data included in the first request information sent to the second network side device. Thus, the second network side device fetches the target data advantageously.

In an embodiment of the disclosure, the first data may include at least one of the following:
input data corresponding to the target model;
output data corresponding to the target model; and
label data corresponding to the target model.

The label data corresponding to the target model may include actually generated data associated with the input data and/or the output data corresponding to the target model.

In the embodiment of the disclosure, the first data may include at least one of the input data corresponding to the target model, the output data corresponding to the target model, and the label data corresponding to the target model. The input data corresponding to the target model refer to input data corresponding to the target model in the actual use stage, the output data corresponding to the target model refer to output data fetched through data analytics on the input data in the actual use stage, and the label data corresponding to the target model refer to the actually generated data associated with the input data and/or the output data corresponding to the target model, or data labelled according to the actually generated data.

For example, the input data corresponding to the target model are the terminal location data of a particular cell within a set time period, and a target task corresponding to the target model is to predict a number of terminals in the cell in a next week. By inputting the input data into the target model, corresponding output data may be fetched, and the output data is prediction information of the number of terminals in the cell in the next week. After one week, an actual number of terminals in the cell may be fetched, the actual number of terminals may be used as the label data corresponding to the target model, and the label data is associated with corresponding input data and output data.

In an embodiment of the disclosure, the relevant information of the first data may include at least one of the following:
task information corresponding to the first data;
information of the model targeted by the first data; and
time information corresponding to the first data.

The task information corresponding to the first data may include at least one of the following:
(1) Identifier information of a target task corresponding to the first data. The identifier information of the target task corresponding to the first data may indicate a specific task targeted by the target data;
(2) Conditional qualification information of the target task. The conditional qualification information of the target task is used for indicating a filter condition of a data analytics result corresponding to the target task; and
(3) Target information targeted by the target task, The target information targeted by the target task may indicate that the object executing the target task for data analytics is a particular terminal, a plurality of terminals or all terminals.

The information of the model targeted by the first data may include at least one of the following:
(1) Identifier information of the model targeted by the first data. The identifier information of the model targeted by the first data may indicate that the first data is targeted at a particular model. In the embodiment of the disclosure, the model targeted by the first data is the target model; and
(2) Filter information of the model targeted by the first data. The filter information of the model targeted by the first data may indicate a filter condition that the model targeted by the first data needs to satisfy.

The time information corresponding to the first data may include at least one of the following:
(1) Time information corresponding to the input data. Specifically, Specifically, the time information corresponding to the input data may include at least one of time node information when the input data is generated, time node information when the input data is fetched by the first network side device, and time node information when the input data is input into the target model;
(2) Time information corresponding to the output data. Specifically, Specifically, the time information corresponding to the output data may include at least one of time node information when the output data is generated, target time node information targeted by the output data, and time information corresponding to the input data associated with the output data; and
(3) Time information corresponding to the label data. Specifically, the time information corresponding to the label data may include at least one of time node information when the label data is generated and time node information when the label data is fetched by the first network side device.

A time node when the output data is generated may be the same as a time node when the input data is input into the target model, or the time node when the input data is input into the target model and the output data is generated after the target model completes computation.

A target time node targeted by the output data may be a time node corresponding to the prediction information included in the output data. For example, the prediction information included in the output data is the number of terminals in a particular cell after one weak, such as on day X, and the target time node is the day X after one week. The label data is generated at the target time node correspondingly. According to the target time node targeted by the output data and the time node when the label data is generated, the output data may be associated with the label data.

The time information corresponding to the input data associated with the output data may include at least one of time node information when the input data associated with the output data is generated, time node information when the input data associated with the output data is fetched by the first network side device, and time node information when the input data associated with the output data is input into the target model. The output data may be associated with the input data according to the time information corresponding to the output data associated with the output data.

The time information corresponding to the input data, the time information corresponding to the output data, and the time information corresponding to the label data may help to determine the model performance information later. For example, by comparing the time information corresponding to the output data with the time information corresponding to the label data, the output data corresponding to the target model may be associated with/bound to/mapped to the label data corresponding to the output data, to compare/compute/generate the model performance information. For example, the time range information covered by the input data may be known through time information corresponding to the input data corresponding to the target model, that is, a particular time range. For example, the time information corresponding to the input data is Monday of a particular week at the earliest and is Friday of this week at the latest, it indicates that the time range covered by these data is from Monday to Friday of a particular week. This time range may be used for recording and guaranteeing timeliness of the model performance information.

In an embodiment of the disclosure, in a case that the first request information includes the attribute information of the target data, before the step that a first network side device sends first request information to a second network side device, the method may further include a step as follows:
the first network side device sends third indication information to the third network side device, where the third indication information is used for indicating the third network side device to collect and store second data and/or relevant information of the second data, and the second data is partial data or all data of the target data.

In the embodiment of the disclosure, in a case that the first request information includes the attribute information of the target data, before the step a first network side device sends first request information to a second network side device, the first network side device may send the third indication information to the third network side device, and the third indication information is used for indicating the third network side device to collect and store the second data and/or the relevant information of the second data. The second data may be partial data or all data of the target data.

In a case that the second data is all data of the target data, the third network side device may collect and store all data of the target data based on the third indication information, and may store the relevant information of the second data simultaneously. Reference can be made to the attribute information of the target data for the relevant information of the second data. The second network side device may fetch all data of the target data through the third network side device.

In a case that the second data is partial data of the target data, the third network side device may collect and store partial data of the target data based on the third indication information, and may store the relevant information of the second data simultaneously. The second network side device may fetch partial data of the target data through the third network side device, and the other partial data of the target data may be collected by the second network side device.

In a case that the first data and the second data are partial data of the target data, respectively, the first data and the second data are different, and the combination of the first data and the second data may be combined and constitute the target data. after fetching the first data, the first network side device sends the second indication information to the third network side device, to indicate the third network side device to store the first data and/or the relevant information of the first data, and may further send the third indication information to the third network side device, to indicate the third network side device to collect and store the second data and/or the relevant information of the second data. The third indication information and the second indication information may be carried in the same message or transmitted through different messages.

The first network side device interchange partial data of the target data with the third network side device, and the other partial data is collected by the third network side device. In this way, an amount of data interchange can be reduced and a network resource is saved advantageously.

In an embodiment of the disclosure, the method may further include a step as follows:
the first network side device receives second storage feedback information sent by the third network side device.

The second storage feedback information includes storage tag information corresponding to the second data.

After collecting and storing the second data and/or the relevant information of the second data, the third network side device may send the second storage feedback information to the first network side device. After receiving the second storage feedback information sent by the third network side device, the first network side device can learn the storage tag information corresponding to the second data, and include the storage tag information in the attribute information of the target data included in the first request information sent to the second network side device. Thus, the second network side device fetches the target data advantageously.

The first storage feedback information and the second storage feedback information may be carried in the same message, and may alternatively be sent through different messages.

In an embodiment of the disclosure, the relevant information of the second data may include at least one of the following:
task information corresponding to the second data;
information of the model targeted by the second data; and
data description information corresponding to the second data.

The relevant information of the second data is used for the third network side device to collect the second data, and reference may be made to the attribute information of the target data or the relevant information of the first data for the relevant information of the second data, which will not be repeated herein.

In an embodiment of the disclosure, the third indication information may include information of a device where the second data is located and/or collection requirement information corresponding to the second data. The information of the device where the second data is located may indicate a location where the third network side device collects the second data, and the collection requirement information corresponding to the second data may indicate a specific requirement for the third network side device to collect the second data.

The information of the device where the second data is located may include at least one of the following:
(1) Identifier information of the device where the second data is located, for example, ID of the device where the second data is located; and
(2) Address information of the device where the second data is located, for example, an IP address and an FQDN of the device where the second data is located.

The collection requirement information corresponding to the second data may include at least one of the following:
(1) Data type information of the second data. The data type information of the second data may indicate which data type of second data is to be collected, for example, collection of second data of a terminal location information type; and
(2) Time range information corresponding to the second data. The time range information corresponding to the second data is used for indicating a time range within which time information corresponding to the second data is. The time range information corresponding to the second data may indicate a time range within which data is to be collected. The time range information may include a start time node and an end time node. For example, the time information corresponding to the data is generation time. The time range information may indicate that data generated between the start time node and the end time node are collected;
(3) Location range information corresponding to the second data. The location range information corresponding to the second data is used for indicating a location range within which location information corresponding to the second data is. The location range information corresponding to the second data may indicate that a location range within which data is to be collected. For example, the location information of the data is a location of data generation. The location range information may indicate that data located within the location range when generated are collected, for example, data located within a tracking area or a cell when generated; and
(4) Collection time information of the second data. The collection time information of the second data is used for indicating a time requirement for collecting the second data. The collection time information of the second data may indicate a duration range within which the second data is to be collected. For example, the collection duration is one next month, and the third network side device needs to collect the second data regularly within the next month. For example, the collection duration is a previous month, and the third network side device needs to collect the second data within the previous month.

The third indication information includes the information of the device where the second data is located and/or the collection requirement information corresponding to the second data. Thus, the third network side device advantageously collects and stores the second data and/or the relevant information of the second data timely.

In an embodiment of the disclosure, the first data may include the input data corresponding to the target model and/or the output data corresponding to the target model, and the second data includes the label data corresponding to the target model. That is, the first network side device collects the input data corresponding to the target model, may fetch corresponding output data based on the target model and the input data simultaneously, and then sends the second indication information to the third network side device, to indicate the third network side device to store the first data including the input data and the output data and/or the relevant information of the first data. The first network side device may send the third indication information to the third network side device simultaneously, to indicate the third network side device to collect and store the second data including the label data and/or the relevant information of the second data. After fetching the first data and the second data from the third network side device, the second network side device may test the model performance condition of the target model according to the output data included in the first data and the label data included in the second data, to determine the model performance information, or fetch corresponding output data according to the input data included in the first data, and then test the model performance condition of the target model according to the output data and the label data, to determine the model performance information.

Or the first data may include the input data corresponding to the target model, and the second data may include the label data corresponding to the target model. That is, the first network side device collects the input data corresponding to the target model, and then sends the second indication information to the third network side device, to indicate the third network side device to store the first data including the input data and/or the relevant information of the first data. The first network side device may send the third indication information to the third network side device simultaneously, to indicate the third network side device to collect and store the second data including the label data and/or the relevant information of the second data. After fetching the first data and the second data from the third network side device, the second network side device may fetch the output data corresponding to the target model according to the input data included in the first data, and then test the model performance condition of the target model according to the output data and the label data.

Or the first data may include the output data corresponding to the target model and the label data corresponding to the target model, and the second data may include the input data corresponding to the target model.

Or the first data may include the label data corresponding to the target model, and the second data may include the input data corresponding to the target model.

In any case, as long as the second network side device may finally fetch the output data corresponding to the target model and associated label data, the second network side device may test the model performance condition of the target model based on the output data and corresponding label data and determine the model performance information.

In an embodiment of the disclosure, the step that the second network side device fetches the target data according to the attribute information of the target data may include steps as follows:
Step 1: The second network side device determines, according to the attribute information of the target data, a third network side device storing the target data.
Step 2: The second network side device sends second request information to the third network side device. The second request information is used for requesting acquisition of the target data.
Step 3: The second network side device receives the target data sent by the third network side device.

For the convenience of description, the three steps are combined and described.

In the embodiment of the disclosure, the first network side device may store the target data and/or the attribute information of the target data in the third network side device through interaction with the third network side device. The first network side device may send the first request information to the second network side device in a case of having test demand for the model performance condition of the target model. According to the attribute information of the target data included in the first request information, the second network side device may determine the third network side device that stores the target data at first, and then send the second request information to the third network side device, to request acquisition of the target data. The third network side device may return corresponding target data according to the second request information. After receiving the target data sent by the third network side device, the second network side device may test the model performance condition of the target model according to the target data and determine the model performance information.

The second request information may include at least one of the following:
(1) Identifier information of the first network side device, for example, an ID of the first network side device;
(2) Storage tag information of the target data; where in a case that the target data is all data sent by the first network side device to the third network side device for being stored, one piece of storage tag information of the target data may be provided. In a case that the target data includes data sent by the first network side device to the third network side device for being stored and data collected and stored by the third network side device as indicated by the first network side device, a plurality of pieces of storage tag information of the target data may be provided, and are used for indicating data stored at different moments;
(3) Task information corresponding to the target data;
(4) Information of the model targeted by the target data; and
(5) Data description information corresponding to the target data.

Through the information described above, the second network side device may be clear about the target data to be fetched, and the third network side device can provide target data that satisfy a requirement advantageously.

In an embodiment of the disclosure, after the step that the second network side device determines model performance information of a target model based on the target data, the method may further include a step as follows:
the second network side device determines whether the model performance information satisfies a model performance expectation corresponding to the model performance expectation information.

The step that the second network side device sends the model performance information to the first network side device may include a step as follows:
the second network side device sends the model performance information to the first network side device in a case that the model performance information satisfies or does not satisfy the model performance expectation.

In the embodiment of the disclosure, the first network side device sends the first request information to the second network side device, and the second network side device tests the model performance condition of the target model based on the target data, to determine the model performance information. The model performance information may include an accuracy rate, an error rate, etc. of the model.

The first request information may include the model performance expectation information, and after determining the model performance information, the second network side device may further determine whether the model performance information satisfies the model performance expectation corresponding to the model performance expectation information. For example, the model performance expectation indicates that the accuracy rate of the model is higher than a first threshold. In a case that the accuracy rate of the model included in the model performance information is higher than the first threshold, it indicates that the model performance information satisfies the model performance expectation corresponding to the model performance expectation information; on the contrary, it indicates that the model performance information does not satisfy the model performance expectation corresponding to the model performance expectation information.

In a case that the model performance information satisfies the model performance expectation, the second network side device may send the model performance information to the first network side device, to inform the first network side device that the model performance of a current target model is desirable and the target model may be used continuously.

The second network side device may further send the model performance information to the first network side device in a case that the model performance information does not satisfy the model performance expectation, to inform the first network side device that the model performance of the current target model declines, and continuous use of the current target model may lead to an inaccurate data analytics result. The first network side device may determine whether to continuously use the target model according to the actual condition.

In an embodiment of the disclosure, the method may further include a step as follows:
the second network side device retrains the target model or reselects the model in a case that the model performance information does not satisfy a model performance expectation.

In an embodiment of the disclosure, after determining the model performance information, the second network side device may further determine whether the model performance information satisfies the model performance expectation corresponding to the model performance expectation information. In a case that the model performance information does not satisfy the model performance expectation, the second network side device may retrain the target model, and provide a retrained target model for the first network side device, to be put into actual use. Or the second network side device may reselect the model, provide a reselected model for the first network side device, to be put into actual use. In this way, the accuracy rate of the model in the actual use stage is increased advantageously.

In an embodiment of the disclosure, the method may further include steps as follows:
Step 1: The first network side device sends fourth indication information to the second network side device according to the model performance information, and the fourth indication information is used for indicating the second network side device to retrain the target model or reselect the model.
Step 2: The first network side device receives the retrained model or the reselected model sent by the second network side device.

For the convenience of description, the two steps are combined and described.

After the second network side device determines the model performance information and sends the model performance information to the first network side device, the first network side device may send the fourth indication information to the second network side device according to the model performance information. For example, In a case that it is determined according to the actual condition that the target model needs to be retrained or the model needs to be reselected, the fourth indication information is sent to the second network side device. The fourth indication information is used for indicating the second network side device to retrain the target model or reselect the model.

The second network side device may retrain the target model or reselect the model according to the fourth indication information, and send the retrained model or the reselected model to the first network side device after retraining or reselection.

After receiving the retrained model or the reselected model sent by the second network side device, the first network side device may put such a model into actual use.

By retraining the target model or reselecting the model, the accuracy of the model in the actual use stage can be improved.

In an embodiment of the disclosure, in a case that the target data may include label data corresponding to the target model, and input data and/or output data corresponding to the target model, the step that the second network side device determines model performance information of a target model based on the target data may include steps as follows:
Step 1: The second network side device compares each output data with associated label data, and acquires a comparison result.
Step 2: The second network side device determines the model performance information of the target model according to the comparison result.

For the convenience of description, the two steps are combined and described.

In the embodiment of the disclosure, the target data may include the label data corresponding to the target model, and the input data and/or the output data corresponding to the target model. That is, the target data may include the label data corresponding to the target model and the input data corresponding to the target model, or the target data may include the label data corresponding to the target model and the output data corresponding to the target model, or the target data may include the label data corresponding to the target model, the input data corresponding to the target model, and the output data corresponding to the target model.

After the second network side device fetches the target data, in a case that the target data includes the label data corresponding to the target model and the input data corresponding to the target model, the second network side device may fetch the output data corresponding to the target model based on the target model and the input data corresponding to the target model. In a case that the target data includes the label data corresponding to the target model and the output data corresponding to the target model, or the target data includes the label data corresponding to the target model, the input data corresponding to the target model, and the output data corresponding to the target model, the second network side device fetches the output data corresponding to the target model after fetching the target data.

According to the time information of the output data corresponding to the target model and the time information of the label data corresponding to the target model, an association relationship between the output data and the label data may be determined.

The second network side device may compare each output data with the associated label data, and acquire the comparison result. According to the comparison result, the accuracy rate of each output data compared with the associated label data may be learned, such that the model performance information of the target model can be determined. The second network side device feeds back the model performance information to the first network side device, and the first network side device can determine a further operation based on the model performance information.

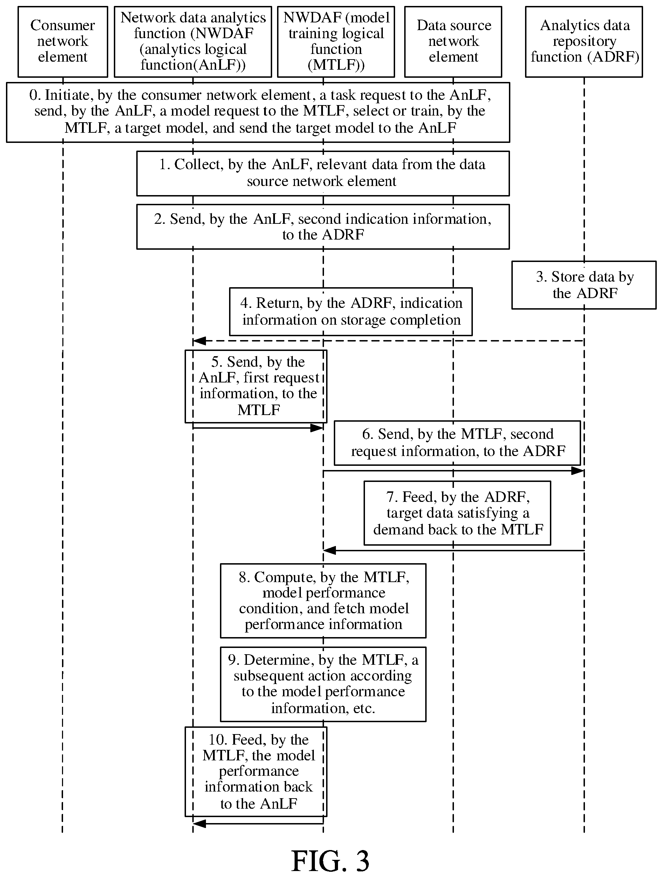

For the convenience of understanding, with the first network side device as the AnLF, the second network side device as the MTLF, and the third network side device as examples, the embodiment of the disclosure will be described again with a specific example shown in FIG. 3:
Step 0: A relevant process of task initiation, model selection, and model distribution is implemented. Specifically, the consumer NF (consumer NF) initiates the task request to the AnLF, to request acquisition of the data analytics result of the target task. The AnLF sends the model request to the MTLF, to request acquisition of the target model used for executing the target task. The MTLF selects or trains a target model that satisfies execution demand for the target task, and sends the target model to the AnLF.
Step 1-Step 5:

The AnLF sends the first request information to the MTLF, to request the MTLF to help test the model performance condition. In a specific scenario, after receiving the target model fed back by the MTLF, the AnLF may want to further know the model performance condition in an actual environment, for example, in a case of using real and real-time data, or in actual use, so as to determine whether to continuously use the target model for data analytics. Before the AnLF sends the first request information to the MTLF, the AnLF may collect and store required target data in the ADRF, and send an address of the ADRF to the MTLF. The MTLF may fetch the required target data from a designated ADRF.

The target data may include the input data (input data), the output data (output data), and the label/label data (label/label data) in a case of actually using the target model. The input data refer to input data that are input into the target model during a use/inference process of the target model for inference by the target model. The output data may be a prediction (prediction), and may alternatively be inference data or inference result data (inference data), that is, the output data/the prediction/the inference data fetched by inputting a set of input data into the target model after operations/prediction/inference. The label data may be understood as actual measured values in the actual environment, and may include a ground truth, that is, a correct labeled value. Generally, a set of data may include a set of input data, output data corresponding to the input data, and label data corresponding to the input data.

Step 1: The AnLF collects relevant data from the data source network element. The AnLF may determine the target data source network element according to the task information. The task information may be carried in the task request sent by the consumer network element in step 0. Then, the AnLF fetches the relevant data from the target data source network element. The relevant data fetched in this step may include the input data and/or the label data. After collecting the input data, the AnLF may input the input data into the target model, and corresponding output data may be fetched through an operation by the target model.

Step 2: The AnLF sends the second indication information to the ADRF, to store the first data in the ADRF. Specifically, the AnLF sends, through the second indication information, the first data (the input data, the output data, and the label data mentioned above) and the relevant information of the first data, such as the task information corresponding to the first data, the model information corresponding to the first data, and the time information corresponding to the first data, to the ADRF. The ADRF stores the first data and/or the relevant information of the first data.

The time information corresponding to the first data may help the subsequent test of the model performance condition. For example, by comparing the time information corresponding to the output data with the time information corresponding to the label data, the output data of the target model may be associated with/bound to/mapped to the label data corresponding to the output data, to compare/compute/generate the model performance information. For example, through the time information corresponding to the input data, it can be learned the time range information (referring to a particular time range, for example, the time information corresponding to the input data is Monday of a particular week at the earliest and is Friday of this week at the latest, it indicates that the time range covered by these data is from Monday to Friday of a particular week) covered by these data. This time range may be used for recording and guaranteeing the timeliness of the model performance information.

In an implementation method, the second indication information may be sent through Nadrf_DataManagement_StorageRequest.

Specifically, the second indication information sent by the AnLF to the ADRF may include at least one of the following:
the input data;
the output data;
the label data;
the time information corresponding to the input data that may include the time node information when the input data is generated, time node information when the input data is fetched by the AnLF, and time node information when the input data is input into the target model; and
the time information corresponding to the output data. The time information corresponding to the output data may include the time node information when the output data is generated. The time node information may be fetched based on the time node when the input data is input into the target model, and may alternatively be fetched based on the time node when the output data is generated after the input data is input into the target model and the target model completes computation. The time information corresponding to the output data may further include the target time node information targeted by the output data. The target time node information may be fetched based on the target time node corresponding to a task predicted by the output data. The time information corresponding to the output data may further include an initial time node corresponding to the output data, and the initial time node may be fetched based on the time information corresponding to the input data associated with the output data;
the time information corresponding to the label data that may include the time node information when the label data is generated and time node information when the label data is fetched by the AnLF;
target task identifier information, such as an Analytics ID, used for indicating that the first data is targeted at a specific task;
conditional qualification information of the target task, such as Analytic filter information, used for indicating the filter information of the data analytics result, such as including the AOI, the S-NSSAI, and the DNN;
object information targeted by the target task, such as target of analytic reporting, used for indicating that the object of the data analytics is a particular terminal, a plurality of terminals or all terminals;
model identifier information, such as a Model ID, used for indicating that the first data are targeted at a particular model; and
filter information of the model used for indicating a condition that the model targeted by the first data needs to satisfy, such as the AOI, the S-NSSAI, and the DNN.

Step 3: The ADRF stores first data received and/or the relevant information of the first data.

Step 4: After completing storage, the ADRF may return storage completion indication information, such as the first storage feedback information, and may feed back the storage tag information of storage this time, such as a Transaction Reference ID, to the AnLF, to inform the AnLF that the storage is successful.

Step 5: The ANLF sends the first request information to the MTLF, to request the MTLF to help test the model performance condition of the target model and determine the model performance information. In this process, the first request information may specifically include at least one of the following:
The first indication information. The first indication information is used for indicating the MTLF to determine the model performance information. The first indication information may be explicit, such as being carried by a specific cell; and may alternatively be implicit, such as expressed by a name of a message carrying the first request information; and
The model performance expectation information, that is, the expectation of the model performance information, such as the threshold and the preset condition. The model performance expectation information is used for informing the MTLF of acceptable model performance information. In a case that the model performance information computed by the MTLF does not satisfy the model performance expectation, some subsequent operations may be triggered, such as retraining the model, reselecting the model, informing the AnLF that the model performance declines and does not satisfy the expectation. The model performance expectation information may alternatively be information of which the MTLF is informed when the AnLF sends the model request to the MTLF in step 0;
identifier information of the ADRF that may be identifier information of the network element specifically, such as a network element ID;
address information of the ADRF that may be address information of the network element specifically, such as an IP address and an FQDN of the network element;
identifier information of the AnLF that may be identifier information of the network element specifically, such as a network element ID;
storage tag information, such as a transaction reference ID, that is, the storage tag information returned by the ADRF in step 4;
the model monitoring time requirement information, that is, the time information of model monitoring. The model monitoring time requirement information may be used for indicating time duration within which the MTLF monitors the model performance condition. For example, the time information is one month, and the MTLF collects relevant information of the model performance regularly in the next month, to compute the model performance condition. Such information may alternatively not exist, or the time information is about very short time, such as immediate, it indicates that the computation is performed once without need to collect data for a long time for monitoring;
the model monitoring area requirement information;
the target task identifier information, such as an Analytics ID, used for indicating that the target data to be fetched are targeted at a specific task;
the conditional qualification information of the target task, such as the Analytic filter information, used for indicating the filter condition of the data analytics result, such as including the AOI, the S-NSSAI, and the DNN;
the target information targeted by the target task, such as target of analytic reporting, used for indicating that the object of the data analytics is a particular terminal, a plurality of terminals or all terminals;
model identifier information, such as a Model ID, used for indicating that the target data to be fetched are targeted at a particular model;
the filter information of the model: indicating a condition that the model targeted by the target data to be fetched needs to satisfy, such as the AOI, the S-NSSAI, and the DNN;
data type information used for indicating a data type of the target data to be fetched, such as the data type of the terminal location information;
the time range information corresponding to the target data used for indicating a time range within which the target data is to be fetched, for example, fetching data generated within a time range determined according to generation time of the data; and
the location range information corresponding to the target data used for indicating a location range within which the target data is to be fetched, for example, fetching data generated in a particular tracking area or cell determined according to the location where the data is generated.

Step 6-Step 7: The MTLF sends the second request information to the ADRF, to request acquisition of the target data. Specifically, the MTLF determines the identifier information and the address information of the target ADRF based on the information in step 5, and sends the second request information to the target ADRF, to fetch the target data. After receiving the second request information, the ADRF feeds back the target data that satisfies the demand to the MTLF. For example, the data corresponding to the storage tag information may be found according to the identifier information of the AnLF plus the storage tag information, and fed back to the MTLF. For example, the ADRF determines specific data according to a combination of the attribute information of the target data, such as the task identifier information and the model identifier information, and feeds the data back to the MTLF.

The second request information may include at least one of the following:
the identifier information of the AnLF;
the storage tag information of the target data;
the identifier information of the target task corresponding to the target data;
the conditional qualification information of the target task;
the target information targeted by the target task;
the identifier information of the model targeted by the target data;
the data type information of the target data;
the time range information corresponding to the target data; and
the location range information corresponding to the target data.

Step 8-Step 10: After fetching the target data of the target model in the actual environment, the MTLF computes the model performance condition to fetch the model performance information, and determines a subsequent action according to the model performance information. The MTLF may compute the model performance information by comparing the label data with the output data. Then, the MTLF compares the model performance information with the model performance expectation information in step 5, to determine whether it is required to retrain the model or select a new model. For example, in a case that the model performance information does not reach the model performance expectation corresponding to the model performance expectation information, the model may be retrained or the new model may be selected. It is also possible to determine whether to feed back the model performance information to the AnLF by comparing the two pieces of information. For example, the model performance information is fed back to the AnLF in a case that the model performance information does not reach the model performance expectation corresponding to the model performance expectation information, or the AnLF is notified after the model performance information is computed, or periodic feedback may alternatively be implemented.

The first data in the example described above may be all data of the target data.

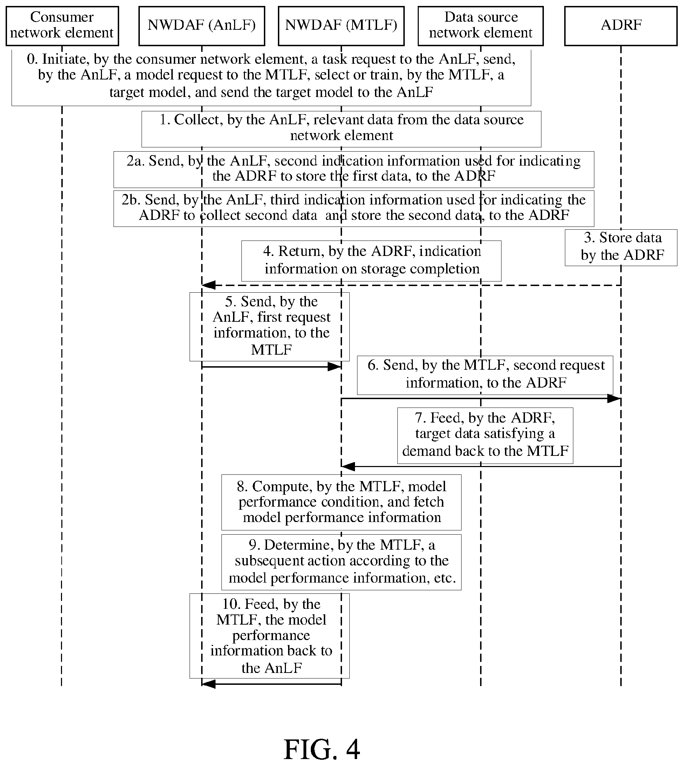

The embodiment of the disclosure will be described again with reference to another example shown in FIG. 4. In this example, the first data is partial data of the target data. This example has roughly the same flow as the previous example with a difference in steps 1, 2, 4, 5 and 6.

Specifically, in step 1 of this example, the AnLF is not responsible for collecting all relevant data, and may merely collect partial data, for example, merely the input data, but not the label data. Then, in step 2, the AnLF indicates the ADRF to store the first data collected by the AnLF (step 2a), for example, the first data including the input data, and further indicates the ADRF to collect the second data from the designated data source network element and store the second data, and the second data is the label data, for example (step 2b).

In a case that the AnLF merely informs the ADRF of partial target data, the third indication information sent by the AnLF to the ADRF is used for indicating, in step 2b, the ADRF to collect, from a target data source network element, and store the second data and/or the relevant information of the second data that may specifically include at least one of the following:
the information of the device where the second data is located, through which the ADRF may know where the second data is collected;
the identifier information of the device where the second data is located, such as the network element ID;
the address information of the device where the second data is located, such as the IP address and the FQDN of the network element;
the collection requirement information corresponding to the second data, through which the ADRF may determine the second data to be collected;
the data type information of the second data used for indicating which data is collected, such as the data of the location information type of the terminal;
the time range information corresponding to the second data used for indicating a time range within which data is to be collected;
the location range information corresponding to the second data used for indicating a location range within which data is to be collected; and
the collection time information of the second data used for indicating a duration range within which the second data is to be collected by the ADRF. For example, the collection duration information is one month, and the ADRF collects the second data regularly in the next month. The collection duration information may alternatively be a time period in the past.

In an implementation method, the task of step 2b may be completed through Nadrf_DataManagement_StorageSubscriptionRequest.

Due to addition of step 2b, the second storage feedback information may alternatively be sent in step 4, and includes corresponding storage tag information. The first request information in step 5 also needs to include the storage tag information, such that the MTLF requests corresponding data from the ADRF in step 6.

The embodiment of the disclosure provides the method for the AnLF to fetch the model performance information. By the method, the AnLF fetches the model performance information conveniently, and makes more appropriate selection accordingly. For example, the AnLF stops using the data analytics result of the model in a case of discovering that the model performance condition is poor, thus avoiding bad influence on network states and user experience.

On the other hand, data and contents that the ADRF can store are increased, such that the ADRF can store the relevant data of the model. The data stored in the ADRF can also be collected and used by other network elements. For example, the MTLF can fetch relevant data from the ADRF, to compute the model performance condition, or train other models according to such information.

An execution subject of the method for fetching information according to the embodiment of the disclosure may be an apparatus for fetching information. In the embodiment of the disclosure, the apparatus for fetching information according to the embodiment of the disclosure is described with the apparatus for fetching information executing the method for fetching information as an example.

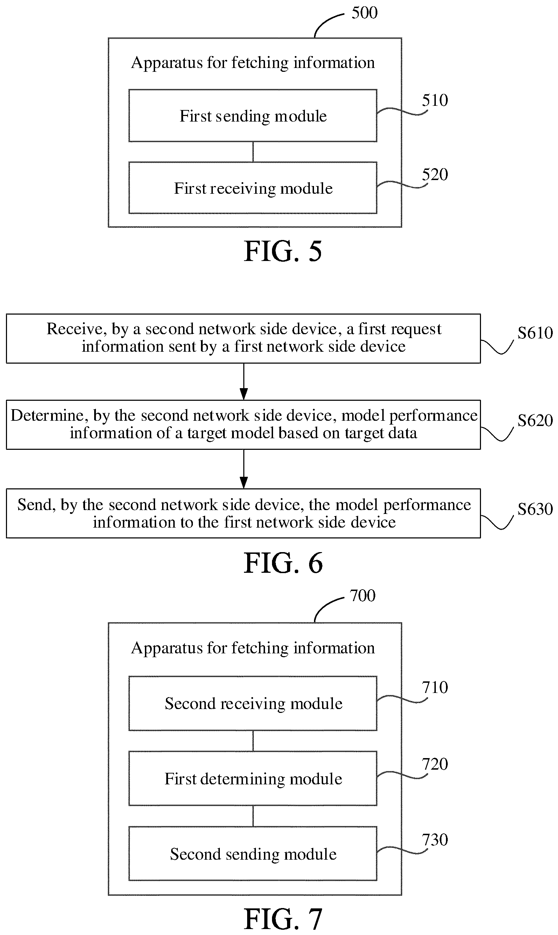

As shown in FIG. 5, the apparatus 500 for fetching information may include modules as follows:
a first sending module 510 configured to send first request information to a second network side device, where the first request information is used for requesting the second network side device to determine model performance information of a target model; and
a first receiving module 520 configured to receive the model performance information of the target model sent by the second network side device, where
the first request information includes target data and/or attribute information of the target data, the target data is used for testing a model performance condition of the target model, and the attribute information of the target data is used for fetching the target data.

By applying the apparatus according to the embodiment of the disclosure, the first request information is sent to the second network side device, and the first request information is used for requesting the second network side device to determine the model performance information of the target model. After the model performance information of the target model determined by the second network side device based on the target data is received, accuracy of a data analytics result of the target model in an actual use stage can be determined according to the model performance information. Thus, a data analytics result with high accuracy is provided for and assists the internal and external devices of the communication network in making policy decisions, and guarantee is provided for making correct policy decisions by the internal and external devices of the communication network.

In a specific implementation of the disclosure, the first request information further includes at least one of the following:
first indication information;
model performance expectation information;
model monitoring time requirement information; and
model monitoring area requirement information.

The first indication information is used for indicating the second network side device to determine the model performance information of the target model.

The model performance expectation information is used for indicating the model performance information of the target model expected by the first network side device.

The model monitoring time requirement information is used for indicating the time range within which the second network side device determines the model performance information of the target model.

The model monitoring area requirement information is used for indicating the area range within which the second network side device determines the model performance information of the target model.

In a specific implementation of the disclosure, the attribute information of the target data includes at least one of the following:
task information corresponding to the target data;
information of the model targeted by the target data;
data description information corresponding to the target data; and
storage information corresponding to the target data.

In a specific implementation of the disclosure, the task information corresponding to the target data includes at least one of the following:
identifier information of a target task corresponding to the target data;
conditional qualification information of the target task; and
target information targeted by the target task.

The conditional qualification information of the target task is used for indicating a filter condition of a data analytics result corresponding to the target task.

In a specific implementation of the disclosure, the information of the model targeted by the target data includes at least one of the following:
identifier information of the model targeted by the target data; and filter information of the model targeted by the target data.

In a specific implementation of the disclosure, the data description information corresponding to the target data includes at least one of the following:
data type information of the target data; time range information corresponding to the target data; and location range information corresponding to the target data.

The time range information corresponding to the target data is used for indicating a time range within which time information corresponding to the target data is.

The location range information corresponding to the target data is used for indicating a location range within which location information corresponding to the target data is.

In a specific implementation of the disclosure, the storage information corresponding to the target data includes at least one of the following:
identifier information of a third network side device storing the target data; address information of the third network side device; storage tag information of the target data; and identifier information of the first network side device.

In a specific implementation of the disclosure, in a case that the first request information includes the attribute information of the target data, the apparatus 500 for fetching information further includes:
a first fetching module configured to fetch first data before the first request information is sent to the second network side device, where the first data is partial data or all data of the target data; and
the first sending module 510 further configured to send second indication information to the third network side device, where the second indication information includes the first data and/or relevant information of the first data, and is used for indicating the third network side device to store the first data and/or relevant information of the first data.

In a specific implementation of the disclosure, the first receiving module 520 is further configured to:
receive first storage feedback information sent by the third network side device.

The first storage feedback information includes storage tag information corresponding to the first data.

In a specific implementation of the disclosure, the first data includes at least one of the following:
input data corresponding to the target model; output data corresponding to the target model; and label data corresponding to the target model.

In a specific implementation of the disclosure, the label data corresponding to the target model include actually generated data associated with the input data and/or the output data corresponding to the target model.

In a specific implementation of the disclosure, the relevant information of the first data includes at least one of the following:
task information corresponding to the first data; information of the model targeted by the first data; and time information corresponding to the first data.

In a specific implementation of the disclosure, the task information corresponding to the first data includes at least one of the following:
identifier information of a target task corresponding to the first data; conditional qualification information of the target task; and target information targeted by the target task.

In a specific implementation of the disclosure, the information of the model targeted by the first data includes at least one of the following:
identifier information of the model targeted by the first data; and filter information of the model targeted by the first data.

In a specific implementation of the disclosure, the time information corresponding to the first data includes at least one of the following:
time information corresponding to the input data; time information corresponding to the output data; and time information corresponding to the label data.

In a specific implementation of the disclosure, the time information corresponding to the input data includes at least one of the following:
time node information when the input data is generated;
time node information when the input data is fetched by the first network side device; and
time node information when the input data is input into the target model

In a specific implementation of the disclosure, the time information corresponding to the output data includes at least one of the following:
time node information when the output data is generated;
target time node information targeted by the output data; and
time information corresponding to the input data associated with the output data.

In a specific implementation of the disclosure, the time information corresponding to the label data includes at least one of the following:
time node information when the label data is generated; and
time node information when the label data is fetched by the first network side device.

In a specific implementation of the disclosure, the second sending module is further configured to:
in a case that the first request information includes the attribute information of the target data, before sending the first request information to the second network side device, send third indication information to the third network side device, where the third indication information is used for indicating the third network side device to collect and store second data and/or relevant information of the second data, and the second data is partial data or all data of the target data.

In a specific implementation of the disclosure, the first receiving module 520 is further configured to:
receive second storage feedback information sent by the third network side device.

The second storage feedback information includes storage tag information corresponding to the second data.

In a specific implementation of the disclosure, the relevant information of the second data includes at least one of the following:
task information corresponding to the second data; information of the model targeted by the second data; and data description information corresponding to the second data.

In a specific implementation of the disclosure, the third indication information includes information of a device where the second data is located and/or collection requirement information corresponding to the second data.

In a specific implementation of the disclosure, the information of the device where the second data is located includes at least one of the following:
identifier information of the device where the second data is located; and address information of the device where the second data is located.

In a specific implementation of the disclosure, the collection requirement information corresponding to the second data includes at least one of the following:
data type information of the second data; time range information corresponding to the second data; location range information corresponding to the second data; and collection time information of the second data.

The time range information corresponding to the target data is used for indicating a time range within which time information corresponding to the second data is;
The location range information corresponding to the second data is used for indicating a location range within which location information corresponding to the second data is.

The collection time information of the second data is used for indicating a time requirement for collecting the second data.

In a specific implementation of the disclosure, the first data includes the input data corresponding to the target model and/or the output data corresponding to the target model, and the second data includes the label data corresponding to the target model.

In a specific implementation of the disclosure, the first sending module 510 is further configured to send fourth indication information to the second network side device according to the model performance information, and the fourth indication information is used for indicating the second network side device to retrain the target model or reselect the model.

The first receiving module 520 is further configured to receive a retrained model or a reselected model sent by the second network side device.

The apparatus 500 for fetching information according to the embodiment of the disclosure can implement various processes implemented by the method embodiment of FIG. 2, and achieve the same technical effect, which will not be repeated herein for avoiding repetition.

In correspondence to the method embodiment shown in FIG 2, the disclosure further provides a method for fetching information. With reference to FIG. 6, the method may include steps as follows:
S610: A second network side device receives first request information sent by a first network side device, where the first request information includes target data and/or attribute information of the target data, and the attribute information of the target data is used for fetching the target data.
S620: The second network side device determines model performance information of a target model based on the target data; and
S630: The second network side device sends the model performance information to the first network side device.

By using the method according to the embodiment of the disclosure, the second network side device receives the first request information sent by the first network side device, tests a model performance condition of the target model based on the target data, and determines the model performance information. Then, the second network side device sends the model performance information of the target model to the first network side device. The first network side device fetches the model performance information of the target model accordingly. Then, accuracy of a data analytics result of the target model in an actual use stage can be determined according to the model performance information. Thus, a data analytics result with high accuracy is provided for and assists internal and external devices of a communication network in making the policy decisions, and guarantee is provided for making correct policy decisions by the internal and external devices of the communication network.

In a specific implementation of the disclosure, the first request information further includes at least one of the following:
first indication information; model performance expectation information; model monitoring time requirement information; and model monitoring area requirement information.

The first indication information is used for indicating the second network side device to determine the model performance information of the target model.

The model performance expectation information is used for indicating the model performance information of the target model expected by the first network side device.

The model monitoring time requirement information is used for indicating the time range within which the second network side device determines the model performance information of the target model.

The model monitoring area requirement information is used for indicating the area range within which the second network side device determines the model performance information of the target model.

In a specific implementation of the disclosure, the attribute information of the target data includes at least one of the following:
task information corresponding to the target data; information of the model targeted by the target data; data description information corresponding to the target data; and storage information corresponding to the target data.

In a specific implementation of the disclosure, the task information corresponding to the target data includes at least one of the following:
identifier information of a target task corresponding to the target data; conditional qualification information of the target task; and target information targeted by the target task.

The conditional qualification information of the target task is used for indicating a filter condition of a data analytics result corresponding to the target task.

In a specific implementation of the disclosure, the information of the model targeted by the target data includes at least one of the following:
identifier information of the model targeted by the target data; and filter information of the model targeted by the target data.

In a specific implementation of the disclosure, the data description information corresponding to the target data includes at least one of the following:
data type information of the target data; time range information corresponding to the target data; and location range information corresponding to the target data.

The time range information corresponding to the target data is used for indicating a time range within which time information corresponding to the target data is.

The location range information corresponding to the target data is used for indicating a location range within which location information corresponding to the target data is.

In a specific implementation of the disclosure, the storage information corresponding to the target data includes at least one of the following:
identifier information of a third network side device storing the target data; address information of the third network side device; storage tag information of the target data; and identifier information of the first network side device.

In a specific implementation of the disclosure, in a case that the first request information includes the attribute information of the target data, before the step that the second network side device determines model performance information of a target model based on the target data, the method further includes:
the second network side device fetches the target data according to the attribute information of the target data.

In a specific implementation of the disclosure, the step that the second network side device fetches the target data according to the attribute information of the target data includes:
the second network side device determines, according to the attribute information of the target data, a third network side device storing the target data;
the second network side device sends second request information to the third network side device. The second request information is used for requesting acquisition of the target data; and
the second network side device receives the target data sent by the third network side device.

In a specific implementation of the disclosure, the second request information includes at least one of the following:
identifier information of the first network side device; storage tag information of the target data; and task information corresponding to the target data; information of the model targeted by the target data; data description information corresponding to the target data.

In a specific implementation of the disclosure, after the step that the second network side device determines model performance information of a target model based on the target data, the method further includes:
the second network side device determines whether the model performance information satisfies a model performance expectation corresponding to the model performance expectation information.

The step that the second network side device sends the model performance information to the first network side device includes:
the second network side device sends the model performance information to the first network side device in a case that the model performance information satisfies or does not satisfy the model performance expectation.

In a specific implementation of the disclosure, the method further includes:
the second network side device retrains the target model or reselects the model in a case that the model performance information does not satisfy a model performance expectation.

In a specific implementation of the disclosure, after the step that the second network side device sends the model performance information to the first network side device, the method further includes:
the second network side device receives fourth indication information sent by the first network side device;
the second network side device retrains the target model or reselects the model according to the fourth indication information; and
the second network side device sends a retrained model or a reselected model to the first network side device.

In a specific implementation of the disclosure, in a case that the target data may include label data corresponding to the target model, and input data and/or output data corresponding to the target model, the step that the second network side device determines model performance information of a target model based on the target data includes:
the second network side device compares each output data with associated label data, and acquires a comparison result; and
the second network side device determines the model performance information of the target model according to the comparison result.

Reference can be made to the implementation processes of the method embodiment shown in FIG. 2 for the implementation process of the method embodiment shown in FIG. 6, and the same technical effect is achieved, which will not be repeated herein for avoiding repetition.

An execution subject of the method for fetching information according to the embodiment of the disclosure may be an apparatus for fetching information. In the embodiment of the disclosure, the apparatus for fetching information according to the embodiment of the disclosure is described with the apparatus for fetching information executing the method for fetching information as an example.

As shown in FIG. 7, the apparatus 700 for fetching information may include modules as follows:
a second receiving module 710 configured to receive first request information sent by a first network side device, where the first request information includes target data and/or attribute information of the target data;
a first determining module 720 configured to determine model performance information of a target model based on the target data; and
a second sending module 730 configured to send the model performance information to the first network side device.

By using the apparatus according to the embodiment of the disclosure, the first request information sent by the first network side device is received, the model performance condition of the target model is tested based on the target data, and the model performance information is determined. Then, the model performance information of the target model is sent to the first network side device. The first network side device fetches the model performance information of the target model accordingly. Then, accuracy of a data analytics result of the target model in an actual use stage can be determined according to the model performance information. Thus, a data analytics result with high accuracy is provided for and assists internal and external devices of a communication network in making the policy decisions, and guarantee is provided for making correct policy decisions by the internal and external devices of the communication network.

In a specific implementation of the disclosure, the first request information further includes at least one of the following:
first indication information; model performance expectation information; model monitoring time requirement information; and model monitoring area requirement information.

The first indication information is used for indicating the second network side device to determine the model performance information of the target model.

The model performance expectation information is used for indicating the model performance information of the target model expected by the first network side device.

The model monitoring time requirement information is used for indicating the time range within which the second network side device determines the model performance information of the target model.

The model monitoring area requirement information is used for indicating the area range within which the second network side device determines the model performance information of the target model.

In a specific implementation of the disclosure, the attribute information of the target data includes at least one of the following:
task information corresponding to the target data; information of the model targeted by the target data; data description information corresponding to the target data; and storage information corresponding to the target data.

In a specific implementation of the disclosure, the task information corresponding to the target data includes at least one of the following:
identifier information of a target task corresponding to the target data; conditional qualification information of the target task; and target information targeted by the target task.

The conditional qualification information of the target task is used for indicating a filter condition of a data analytics result corresponding to the target task.

In a specific implementation of the disclosure, the information of the model targeted by the target data includes at least one of the following:
identifier information of the model targeted by the target data; and filter information of the model targeted by the target data.

In a specific implementation of the disclosure, the data description information corresponding to the target data includes at least one of the following:
data type information of the target data; time range information corresponding to the target data; and location range information corresponding to the target data.

The time range information corresponding to the target data is used for indicating a time range within which time information corresponding to the target data is.

The location range information corresponding to the target data is used for indicating a location range within which location information corresponding to the target data is.

In a specific implementation of the disclosure, the storage information corresponding to the target data includes at least one of the following:
identifier information of a third network side device storing the target data; address information of the third network side device; storage tag information of the target data; and identifier information of the first network side device.

In a specific implementation of the disclosure, the apparatus 700 for fetching information further includes a second fetching module configured to:
in a case that the first request information includes the attribute information of the target data, before determining the model performance information of the target model based on the target data, fetch the target data according to the attribute information of the target data.

In a specific implementation of the disclosure, the second fetching module is configured to:
determine, according to the attribute information of the target data, a third network side device storing the target data;
send second request information to the third network side device, where the second request information is used for requesting acquisition of the target data; and
receive the target data sent by the third network side device.

In a specific implementation of the disclosure, the second request information includes at least one of the following:
identifier information of the first network side device; storage tag information of the target data; and task information corresponding to the target data; model information corresponding to the target data; and data description information corresponding to the target data.

In a specific implementation of the disclosure, the apparatus 700 for fetching information further includes:
a second determining module configured to determine whether the model performance information satisfies a model performance expectation corresponding to the model performance expectation information after determining model performance information of a target model based on the target data.

The second sending module 730 is further configured to send the model performance information to the first network side device in a case that the model performance information satisfies or does not satisfy the model performance expectation.

In a specific implementation of the disclosure, the apparatus 700 for fetching information further includes a first executing module configured to:
in a case that the model performance information does not satisfy a model performance expectation, retrain the target model or reselect the model.

In a specific implementation of the disclosure, the apparatus 700 for fetching information further includes a second executing module configured to:
receive fourth indication information sent by the first network side device after sending the model performance information to the first network side device;
retrain the target model or reselect the model according to the fourth indication information; and
send a retrained model or a reselected model to the first network side device.

In a specific implementation of the disclosure, in a case that the target data includes the label data corresponding to the target model, and the input data and/or the output data corresponding to the target model, the first determining module 720 is configured to.
compare each output data with associated label data, and acquire a comparison result; and
determine the model performance information of the target model according to the comparison result.

The apparatus 700 for fetching information according to the embodiment of the disclosure can implement various processes implemented by the method embodiment of FIG. 6, and achieve the same technical effect, which will not be repeated herein for avoiding repetition.

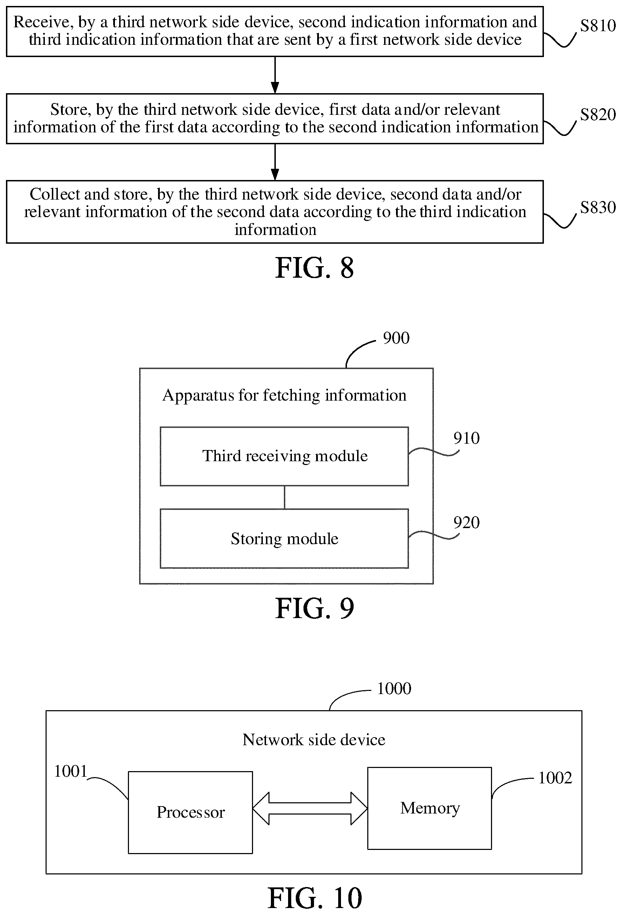

In correspondence to the method embodiments shown in FIG. 2 and FIG. 6, the embodiment of the disclosure further provides a method for fetching information. As shown in FIG. 8, the method may include steps as follows:
S810: A third network side device receives second indication information and third indication information that are sent by a first network side device.
S820: The third network side device stores first data and/or relevant information of the first data according to the second indication information.
S830: The third network side device collects and stores second data and/or relevant information of the second data according to the third indication information.

The first data and the second data are partial data of target data, the target data is used for determining model performance information of a target model, and the relevant information of the first data and the relevant information of the second data are used for fetching the target data.

By applying the method according to the embodiment of the disclosure, the third network side device stores the first data and/or the relevant information of the first data and collects and stores the second data and/or the relevant information of the second data according to the indication information sent by the first network side device. Thus, an amount of data interchanging with the first network side device is reduced, a network resource is saved, and the target data is provided accurately in a case of a request for target data acquisition advantageously.

In a specific implementation of the disclosure, the method may further include steps as follows:
the third network side device receives second request information sent by a second network side device, where the second request information is used for fetching the target data; and
the third network side device sends the target data to the second network side device.

Reference can be made to the implementation processes of the method embodiments shown in FIG. 2 and FIG. 6 for an implementation process of the method embodiment shown in FIG. 8, and the same technical effect is achieved, which will not be repeated herein for avoiding repetition.

An execution subject of the method for fetching information according to the embodiment of the disclosure may be an apparatus for fetching information. In the embodiment of the disclosure, the apparatus for fetching information according to the embodiment of the disclosure is described with the apparatus for fetching information executing the method for fetching information as an example.

As shown in FIG. 9, the apparatus 900 for fetching information may include modules as follows:
a third receiving module 910 configured to receive second indication information and third indication information that are sent by a first network side device; and
a storing module 920 configured to store first data and/or relevant information of the first data according to the second indication information; and collect and store second data and/or relevant information of the second data according to the third indication information.

The first data and the second data are partial data of target data, the target data is used for determining model performance information of a target model, and the relevant information of the first data and the relevant information of the second data are used for fetching the target data.

By applying the apparatus according to the embodiment of the disclosure, the third network side device stores the first data and/or the relevant information of the first data and collects and stores the second data and/or the relevant information of the second data according to the indication information sent by the first network side device. Thus, an amount of data interchanging with the first network side device is reduced, a network resource is saved, and the target data is provided accurately in a case of a request for target data acquisition advantageously.

In a specific implementation of the disclosure, the apparatus 900 for fetching information further includes:
a fourth receiving module configured to receive second request information sent by a second network side device, where the second request information is used for fetching the target data; and
a third sending module configured to send the target data to the second network side device.

The apparatus 900 for fetching information according to the embodiment of the disclosure can implement various processes implemented by the method embodiment of FIG. 8, and achieve the same technical effect, which will not be repeated herein for avoiding repetition.

In correspondence to the method embodiment and the apparatus embodiment described above, as shown in FIG. 10, the embodiments of the disclosure further provide a network side device 1000. The network side device includes a processor 1001 and a memory 1002, and the memory 1002 stores a program or instructions that are runnable on the processor 1001. The program or the instructions implement steps of the embodiment of the method for fetching information when executed by the processor 1001, and can achieve the same technical effect, which will not be repeated herein for avoiding repetition.

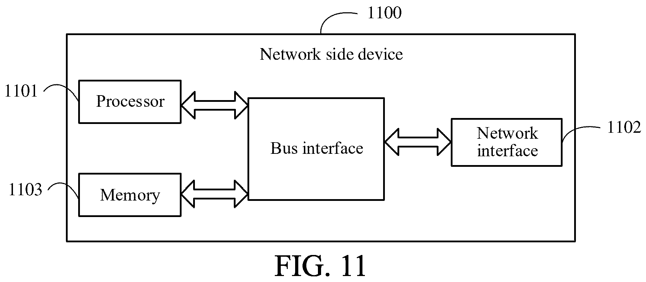

Specifically, the embodiments of the disclosure further provides a network side device. As shown in FIG. 11, the network side device 1100 includes: a processor 1101, a network interface 1102 and a memory 1103. The network interface 1102 is, for example, a common public radio interface (common public radio interface, CPRI).

Specifically, the network side device 1100 of the embodiment of the disclosure further includes: instructions or a program stored on the memory 1103 and executable on the processor 1101. The processor 1101 invokes the instructions or the program in the memory 1103, to execute the methods executed by the modules shown in FIG. 5, FIG. 7 or FIG. 9, and achieves the same technical effect, which will not be repeated herein for avoiding repetition.

The embodiments of the disclosure further provide a readable storage medium. The readable storage medium stores a program or instructions. When executed by a processor, the program or the instructions implement the processes of the method embodiment shown in FIG. 2, the method embodiment shown in FIG. 6 or the method embodiment shown in FIG. 8, and can achieve the same technical effect, which will not be repeated herein for avoiding repetition

The processor is a processor in a terminal described in the embodiment. The readable storage medium includes a computer-readable storage medium, such as a computer read-only memory (ROM), a random access memory (RAM), a magnetic disk and an optical disk.

The embodiments of the disclosure further provide a computer program/program product. The computer program/program product is stored in a storage medium, and the computer program/program product is executed by at least one processor to implement the processes of the method embodiment shown in FIG. 2, the method embodiment shown in FIG. 6 or the method embodiment shown in FIG. 8, and can achieve the same technical effect, which will not be repeated herein for avoiding repetition.

It should be noted that in this context, the terms "comprise", "include" or their any other variation is intended to cover non-exclusive inclusion, such that a process, a method, an article or an apparatus including a series of elements include those elements, and further includes other elements not listed clearly, or further include elements inherent to such a process, method, article or apparatus. In a case of no more limitation, an element limited with the phrase "comprise a..." or "include a..." does not exclude other same element existing in the process, method, article or apparatus including the element. In addition, it should be pointed out that the range of the method and apparatus in the implementation of the disclosure is not limited to execution of functions in order shown or discussed, and can further include execution of functions involved in a substantially simultaneous manner or in reverse order. For example, the method described can be executed in order different from that described, and various steps can be added, omitted, or combined. In addition, features described with reference to some examples can be combined in other examples.

It can be clearly understood by those skilled in the art from the description of the implementation that the method embodiment can be implemented by means of software and necessary general hardware platforms, and may alternatively be implemented through the hardware certainly, of which the former is a preferred implementation in many cases. Based on such understanding, the technical solution in essence of the disclosure or the part that contributes to the prior art may be embodied in the form of computer software products. The computer software products are stored in the storage medium (such as an ROM/RAM, a diskette and an optical disk), and include several instructions to make a terminal (which may be a mobile phone, a computer, a server, an air conditioner, a network device, etc.) execute the method of the embodiments of the disclosure.

The embodiments of the disclosure are described above with reference to the accompanying drawings, but the disclosure is not limited to the particular implementations described above, and the particular implementations described above are merely illustrative rather than restrictive. Under the inspiration of the disclosure, those skilled in the art can make many forms without departing from the purposes of the disclosure and the protection scope of the claims, which should fall within protection of the disclosure.

## Claims

1. A method for fetching information, comprising:
sending, by a first network side device, first request information to a second network side device, wherein the first request information is used for requesting the second network side device to determine model performance information of a target model; and
receiving, by the first network side device, the model performance information of the target model sent by the second network side device, wherein
the first request information comprises target data and/or attribute information of the target data, the target data is used for determining the model performance information of the target model, and the attribute information of the target data is used for fetching the target data.

2. The method according to claim 1, wherein the first request information further comprises at least one of the following:
first indication information;
model performance expectation information;
model monitoring time requirement information; and
model monitoring area requirement information, wherein
the first indication information is used for indicating the second network side device to determine the model performance information of the target model;
the model performance expectation information is used for indicating the model performance information of the target model expected by the first network side device;
the model monitoring time requirement information is used for indicating a time range within which the second network side device determines the model performance information of the target model; and
the model monitoring area requirement information is used for indicating an area range within which the second network side device determines the model performance information of the target model.

3. The method according to claim 1, wherein the attribute information of the target data comprises at least one of the following:
task information corresponding to the target data;
information of the model targeted by the target data;
data description information corresponding to the target data; and
storage information corresponding to the target data.

4. The method according to claim 3, wherein the task information corresponding to the target data comprises at least one of the following:
identifier information of a target task corresponding to the target data;
conditional qualification information of the target task; and
target information targeted by the target task, wherein
the conditional qualification information of the target task is used for indicating a filter condition of a data analytics result corresponding to the target task.

5. The method according to claim 3, wherein the information of the model targeted by the target data comprises at least one of the following:
identifier information of the model targeted by the target data; and
filter information of the model targeted by the target data.

6. The method according to claim 3, wherein the data description information corresponding to the target data comprises at least one of the following:
data type information of the target data;
time range information corresponding to the target data; and
location range information corresponding to the target data, wherein
the time range information corresponding to the target data is used for indicating a time range within which time information corresponding to the target data is; and
the location range information corresponding to the target data is used for indicating a location range within which location information corresponding to the target data is.

7. The method according to claim 3, wherein the storage information corresponding to the target data comprises at least one of the following:
identifier information of a third network side device storing the target data;
address information of the third network side device;
storage tag information of the target data; and
identifier information of the first network side device.

8. The method according to any one of claims 1 to 7, wherein in a case that the first request information comprises the attribute information of the target data, before the sending, by a first network side device, first request information to a second network side device, the method further comprises:
fetching, by the first network side device, first data, wherein the first data is partial data or all data of the target data; and
sending, by the first network side device, second indication information to the third network side device, wherein the second indication information comprises the first data and/or relevant information of the first data, and the second indication information is used for indicating the third network side device to store the first data and/or relevant information of the first data.

9. The method according to claim 8, further comprising:
receiving, by the first network side device, first storage feedback information sent by the third network side device, wherein
the first storage feedback information comprises storage tag information corresponding to the first data.

10. The method according to claim 8, wherein the first data comprises at least one of the following:
input data corresponding to the target model;
output data corresponding to the target model; and
label data corresponding to the target model.

11. The method according to claim 10, wherein the label data corresponding to the target model comprise actually generated data associated with the input data and/or the output data corresponding to the target model.

12. The method according to claim 10, wherein the relevant information of the first data comprises at least one of the following:
task information corresponding to the first data;
information of the model targeted by the first data; and
time information corresponding to the first data.

13. The method according to claim 12, wherein the task information corresponding to the first data comprises at least one of the following:
identifier information of a target task corresponding to the first data;
conditional qualification information of the target task; and
target information targeted by the target task.

14. The method according to claim 12, wherein the information of the model targeted by the first data comprises at least one of the following:
identifier information of the model targeted by the first data; and
filter information of the model targeted by the first data.

15. The method according to any one of claims 1 to 7, wherein in a case that the first request information comprises the attribute information of the target data, before the sending, by a first network side device, first request information to a second network side device, the method further comprises:
sending, by the first network side device, third indication information to the third network side device, wherein the third indication information is used for indicating the third network side device to collect and store second data and/or relevant information of the second data, and the second data is partial data or all data of the target data.

16. The method according to claim 15, wherein further comprising:
receiving, by the first network side device, second storage feedback information sent by the third network side device, wherein
the second storage feedback information comprises storage tag information corresponding to the second data.

17. The method according to claim 15, wherein the relevant information of the second data comprises at least one of the following:
task information corresponding to the second data;
information of the model targeted by the second data; and
data description information corresponding to the second data.

18. The method according to claim 15, wherein the third indication information comprises information of a device where the second data is located and/or collection requirement information corresponding to the second data.

19. The method according to claim 18, wherein the information of the device where the second data is located comprises at least one of the following:
identifier information of the device where the second data is located; and
address information of the device where the second data is located.

20. The method according to claim 18, wherein the collection requirement information corresponding to the second data comprises at least one of the following:
data type information of the second data;
time range information corresponding to the second data;
location range information corresponding to the second data; and
collection time information of the second data, wherein
the time range information corresponding to the target data is used for indicating a time range within which time information corresponding to the second data is;
the location range information corresponding to the second data is used for indicating a location range within which location information corresponding to the second data is; and
the collection time information of the second data is used for indicating a time requirement for collecting the second data.

21. The method according to any one of claims 1 to 20, wherein the model performance information comprises at least one of the following: a model accuracy rate; and a model error rate.

22. An apparatus for fetching information, comprising:
a first sending module configured to send first request information to a second network side device, wherein the first request information is used for requesting the second network side device to determine model performance information of a target model; and
a first receiving module configured to receive the model performance information of the target model sent by the second network side device, wherein
the first request information comprises target data and/or attribute information of the target data, the target data is used for determining the model performance information of the target model, and the attribute information of the target data is used for fetching the target data.

23. A method for fetching information, comprising:
receiving, by a second network side device, first request information sent by a first network side device, wherein the first request information comprises target data and/or attribute information of the target data, and the attribute information of the target data is used for fetching the target data;
determining, by the second network side device, model performance information of a target model based on the target data; and
sending, by the second network side device, the model performance information to the first network side device.

24. The method according to claim 23, wherein the first request information further comprises at least one of the following:
first indication information;
model performance expectation information;
model monitoring time requirement information; and
model monitoring area requirement information, wherein
the first indication information is used for indicating the second network side device to determine the model performance information of the target model;
the model performance expectation information is used for indicating the model performance information of the target model expected by the first network side device;
the model monitoring time requirement information is used for indicating a time range within which the second network side device determines the model performance information of the target model; and
the model monitoring area requirement information is used for indicating an area range within which the second network side device determines the model performance information of the target model.

25. The method according to claim 23, wherein the attribute information of the target data comprises at least one of the following:
task information corresponding to the target data;
information of the model targeted by the target data;
data description information corresponding to the target data; and
storage information corresponding to the target data.

26. The method according to claim 23, wherein in a case that the first request information comprises the attribute information of the target data, before the determining, by the second network side device, model performance information of a target model based on the target data, the method further comprises:
fetching, by the second network side device, the target data according to the attribute information of the target data.

27. The method according to claim 26, wherein the fetching, by the second network side device, the target data according to the attribute information of the target data comprises:
determining, by the second network side device according to the attribute information of the target data, a third network side device storing the target data;
sending, by the second network side device, second request information to the third network side device, wherein the second request information is used for requesting acquisition of the target data; and
receiving, by the second network side device, the target data sent by the third network side device.

28. The method according to claim 27, wherein the second request information comprises at least one of the following:
identifier information of the first network side device;
storage tag information of the target data;
task information corresponding to the target data;
information of the model targeted by the target data; and
data description information corresponding to the target data.

29. The method according to claim 24, wherein after the determining, by the second network side device, model performance information of a target model based on the target data, the method further comprises:
retraining, by the second network side device, the target model or reselecting, by the second network side device, a model in a case that the model performance information does not satisfy a model performance expectation.

30. The method according to any one of claims 23 to 29, wherein in a case that the target data comprises label data corresponding to the target model, and input data and/or output data corresponding to the target model, the determining, by the second network side device, model performance information of a target model based on the target data comprises:
comparing, by the second network side device, each output data with associated label data, and acquiring a comparison result; and
determining, by the second network side device, the model performance information of the target model according to the comparison result.

31. The method according to any one of claims 23 to 30, wherein the sending, by the second network side device, the model performance information to the first network side device comprises:
sending, by the second network side device, the model performance information to the first network side device in a case that the model performance information satisfies or does not satisfy the model performance expectation.

32. The method according to any one of claims 23 to 31, wherein the determining model performance information of a target model comprises: monitoring the target model.

33. The method according to any one of claims 1 to 21 and claims 23 to 32, wherein the first network side device comprises an analytics logical function (AnLF); and the second network side device comprises a model training logical function (MTLF).

34. An apparatus for fetching information, comprising:
a second receiving module configured to receive first request information sent by a first network side device, wherein the first request information comprises target data and/or attribute information of the target data, and the attribute information of the target data is used for fetching the target data;
a first determining module configured to determine model performance information of a target model based on the target data; and
a second sending module configured to send the model performance information to the first network side device.

35. A method for fetching information, comprising:
receiving, by a third network side device, second indication information and third indication information that are sent by a first network side device;
storing, by the third network side device, first data and/or relevant information of the first data according to the second indication information; and
collecting and storing, by the third network side device, second data and/or relevant information of the second data according to the third indication information, wherein
the first data and the second data are partial data of target data, the target data is used for determining model performance information of a target model, and the relevant information of the first data and the relevant information of the second data are used for fetching the target data.

36. The method according to claim 35, further comprising:
receiving, by the third network side device, second request information sent by a second network side device, wherein the second request information is used for fetching the target data; and
sending, by the third network side device, the target data to the second network side device.

37. An apparatus for fetching information, comprising:
a third receiving module configured to receive second indication information and third indication information that are sent by a first network side device; and
a storing module configured to store first data and/or relevant information of the first data according to the second indication information; and collect and store second data and/or relevant information of the second data according to the third indication information, wherein
the first data and the second data are partial data of target data, the target data is used for determining model performance information of a target model, and the relevant information of the first data and the relevant information of the second data are used for fetching the target data.

38. A network side device, comprising: a processor and a memory, wherein the memory stores a program or instructions that are runnable on the processor, and the program or the instructions implement steps of the method for fetching information according to any one of claims 1 to 21, steps of the method for fetching information according to any one of claims 23 to 33, or steps of the method for fetching information according to claim 35 or 36 when executed by the processor.

39. A readable storage medium, storing a program or instructions, wherein the program or the instructions implement steps of the method for fetching information according to any one of claims 1 to 21, steps of the method for fetching information according to any one of claims 23 to 33, or steps of the method for fetching information according to claim 35 or 36 when executed by a processor.
